(19) **Europäisches Patentamt**

**European Patent Office**

**Office européen des brevets**

(11) **EP 1 043 912 A2**

(12) **EUROPEAN PATENT APPLICATION**

(43) Date of publication:
**11.10.2000 Bulletin 2000/41**

(51) Int. Cl.⁷: **H04Q 11/00**

(21) Application number: **00302888.3**

(22) Date of filing: **05.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.04.1999 US 286431**
**30.12.1999 US 475139**

(71) Applicant:
**Nortel Networks Limited**
**Montreal, Quebec H2Y 3Y4 (CA)**

(72) Inventors:
• **Beshai, Maged E.**
  **Stittfilles, Ontario K2S 1E2 (CA)**
• **Vickers, Richard**
  **Kanata, Ontario K2K 1P2 (CA)**

(74) Representative:
**Berkson, Michael David et al**
**Nortel Networks**
**Intellectual Property Law Group**
**London Road**
**Harlow, Essex CM17 9NA (GB)**

(54) **Self-configuring distributed switch**

(57) A self-configuring distributed switch (100,400) is disclosed. The switch comprises a channel switch core (102, 452) connected by a plurality of channels (94,454) to a plurality of high-capacity data switch modules (84,402). A core controller (84a,476) selects paths through the channel switch core and reconfigures the paths in response to dynamic changes in data traffic loads. Propagation delays between the data switch modules and the channel switch core are coordinated to keep reconfiguration guard time minimized. The advantage is a very high-capacity, load-adaptive, self-configuring switch that can be geographically distributed to serve a large geographical area.

*Fig. 2*

EP 1 043 912 A2

Printed by Xerox (UK) Business Services
2.16.7 (HRS)/3.6

## Description

## TECHNICAL FIELD

This invention relates generally to high-capacity data switches. In particular, it relates to a self-configuring distributed switch with a channel-switched core which automatically adapts to varying data traffic loads in a switched data network, and has a very high switching capacity.

## BACKGROUND OF THE INVENTION

The volume of data now exchanged through telecommunications networks requires data networks having a high data transfer capacity. Such networks must also serve large geographical areas. Network scalability to achieve a very high-capacity and wide-area coverage may be realized by increasing the number of nodes in a network and/or increasing the transfer capacity per node. For a given link capacity, e.g., 10 Gb/s, increasing the capacity per node necessitates increasing the number of links per node. In a balanced network, the mean number of hops per node pair is inversely proportional to the number of links per node. Decreasing the mean number of hops per node pair dramatically reduces network-control complexity, facilitates the routing function, and enables the realization of network-wide quality of service (QOS) objectives.

In order to decrease the number of hops per node pair in a network, very high-capacity switches are required. Consequently, methods are required for constructing very high-capacity switches. It is also desirable that such switches be distributed to permit switch access modules to be located in proximity of data traffic sources.

Advances in optical switching technology have greatly facilitated the construction of high-capacity switches using optical space switches in the switch core. The principal problem encountered in constructing high-capacity switches, however, is the complexity of coordinating the transfer of data between ingress and egress, while permitting the creation of new paths between the ingress and the egress. Consequently, there exists a need for a method of increasing data transfer capacity while simplifying data transfer control in a high-speed data switch.

The design of data switching systems has been extensively reported in the literature. Several design alternatives have been described. Switches of moderate capacity are preferably based on a common-buffer design. For higher capacity switches, the buffer-space-buffer switch and the linked-buffers switch have gained widespread acceptance. A switch based on an optical space-switched core is described in United States Patent 5,475,679 which issued on December 12, 1995 to Munter. An optical-core switching system is described in United States Patent 5,754,320 which issued May 19, 1998 to Watanabe et al.

A buffer-space-buffer switch, also called a space-core switch, typically consists of a memoryless fabric connecting a number of ingress modules to a number of egress modules. The ingress and egress modules are usually physically paired, and an ingress/egress module pair often shares a common payload memory. An ingress/egress module pair that shares a common payload memory is hereafter referred to as an edge module. The passive memoryless fabric is preferably adapted to permit reconfiguration of the inlet-outlet paths within a predefined transient time. The memoryless core is completely unaware of the content of data streams that it switches. The core reconfiguration is effected by either a centralized or a distributed controller in response to spatial and temporal fluctuations in the traffic loads at the ingress modules.

The linked-buffers architecture includes module sets of electronic ingress modules, middle modules, and egress modules, and has been described extensively in the prior art. Each module is adapted to store data packets and forward the packets toward their respective destinations. The module-sets are connected in parallel using internal links of fixed capacity.

The control function for the linked-buffers switch is much simpler than the control function for the space-core switch. The capacity of the linked-buffers switch is limited by the capacity of each module-set, the number of internal links emanating from each ingress module, and the number of internal links terminating to each egress module. With a given module-set capacity, the capacity of a linked-buffers switch can be increased virtually indefinitely by increasing the number of internal links, which permits the number of module-sets in the switch to be accordingly increased. However, with a fixed module capacity, when the number of internal links is increased, the capacity of each internal link must be correspondingly reduced. Reducing the capacity of an internal link is not desirable because it limits the capacity that can be allocated to a given connection or a stream of connections. A switch with a space switch core does not suffer from this limitation.

The linked-buffers switch can be modified in a known way by replacing a module-set with a single module having a higher capacity than that of any of the modules in the module set. As described above, a module set includes an ingress module, a middle module, and an egress module. The modified configuration enables both direct and tandem connections between ingress and egress and is hereafter referred to as a mesh switch. The mesh switch enables direct switching from ingress to egress as well as tandem switching.

A disadvantage of the switching architectures described above is their limited scalability.

Prior art switches may be classified as channel switches that switch channels without examining the content of any channel, and content-aware data switches. A switched channel network has a coarse granularity. In switched data networks, inter-nodal links have fixed capacities. Consequently, fluctuations in traffic loads can require excessive tandem switching loads that can reduce the throughput and affect network performance.

There therefore exists a need for a self-configuring data switch that can adapt to fluctuations in data traffic loads.

## OBJECTS OF THE INVENTION

It is therefore an object of the invention to provide a very high-capacity switch with a channel-switching core.

It is another object of the invention to provide an architecture for an expandable channel-switching core.

It is yet another object of the invention to provide a self-configuring switch that adjusts its internal module-pair capacity in response to fluctuations in data traffic volumes.

It is a further object of the invention to provide a data switch that implements both direct channel paths and tandem channel paths.

It is yet a further object of the invention to provide a data switch in which channel switching and connection routing are fully coordinated.

It is a further object of the invention to provide a method and an apparatus for time coordination of connection routing and path reconfiguration.

It is a further object of the invention to provide a method of interleaving time-critical data and delay-tolerant data on a shared transmission medium.

It is a further object of the invention to provide a method of assigning inter-module paths so as to maximize the use of direct ingress/egress data transfer.

It is a further object of the invention to provide a very high-capacity switch with a channel-switching core having multiple independent optical switching core modules.

It is another object of the invention to provide a method of reconfiguring the core of a packet switch having distributed edge modules and distributed optical switching core modules.

It is yet another object of the invention to provide a self-configuring switch with optical switching core modules that adjusts its internal inter-module connections in response to fluctuations in data traffic volumes.

It is yet a further object of the invention to provide a data switch with an optical switching modular core in which channel switching and connection routing are fully coordinated.

It is another object of the invention to develop a self-configuring switch with a distributed optical switching core that circumvents core-switching latency.

## SUMMARY OF THE INVENTION

In accordance with a first embodiment of the invention, there is provided an agile switch that includes a channel-switched core and a plurality of data switch modules connected to local data traffic sources through incoming links and to local data traffic sinks through outgoing links, and connected to the channel-switched core by a plurality of inner channels, each data switch module having a local controller and a local time counter circuit, means for sorting data units into data groups corresponding to the respective channels, a memory for storing the sorted data groups, means for determining a volume of data in each data group, means for reporting each volume of data to a core controller **CHARACTERIZED** by:

the core controller dynamically configures the channel connections among data switch module pairs to adapt to spatial and temporal variations in data traffic loads.

The channel switch core permits any two modules to be connected by an integer number of channels. A channel has a predefined capacity, typically several Gb/s. In order to enable the switching of traffic streams at arbitrary transfer rates, the inter-module connection pattern is changed in response to fluctuations in data traffic load. However, it may not be possible to adaptively modify the paths between modules to accommodate all data traffic variations, and it may be uneconomical to establish under-utilized paths for node-pairs of low traffic. To overcome this difficulty, a portion of the data traffic flowing between a source module and a sink module may be switched through one or more intermediate modules. Thus, in effect, the switch functions as a hybrid of a channel switch and a linked-buffers data switch, benefiting from the elastic path capacity of the channel switch and the ease of control of the linked-buffers data switch.

Changes to the channel switch connectivity are preferably computed by a global controller which determines changes in the input-output configurations of some space switches. The reconfiguration may be implemented in each of the P space switches. To realize a smooth reconfiguration, it is preferable that the connectivity changes be implemented in one space switch at a time. The central controller ensures that one-to-one mapping, or one-to-many mapping, of the channels is preserved in order to avoid collision. A collision results from many-to-one mapping.

The switching modules need not be collocated with each other or with the space switch core. Consequently, the respective lengths of the links between the switching modules and the switch core may vary significantly. Hence, a timing mechanism is needed to coordinate the reconfiguration of the inter-module paths to ensure that data is not lost during reconfiguration. The timing mechanism is distributed. One of the modules is collocated with the channel switch core and hosts a global controller. The other switch modules may be located any desired distance from the channel switch core. Each of the modules operates a local cyclical time counter of a predetermined period. Each time the local counter turns zero, the nodule sends a timing packet to the global controller. On receipt of a timing packet, the global controller time-stamps the packet and places it in a transmit queue from which it is transferred back to its respective module. On receipt of the returned stamped timing packet, a module extracts the time-stamp information and uses it to adjust its time counter at an appropriate time. This coordinates the local time counter with the global time counter to enable switch reconfigurations with a minimal guard time. The guard time is also needed to compensate for transient periods in the channel switch during reconfiguration.

In accordance with a second embodiment of the invention, there is provided an agile data switch as claimed in claim 1 wherein the channel-switched core is modular and the switch comprises:

a plurality of slow-switching core modules, each of the core modules including a plurality of optical space switches;
a plurality of fast-switching edge modules; and
a core controller associated with each core module, the core controller instructing the fast-switching edge modules to switch from unused inner channels to respective new inner channels reconfigured in the core module, thereby masking switching latency of the slow-switching core modules without interrupting data transfer from the source edge-modules.

The invention further provides a method of coordinating connection changes in an agile distributed data switch comprising a plurality of data switching modules interconnected by a channel-switched core, the switching modules being spatially distributed such that propagation delay periods from the respective modules to the channel-switched core are generally unequal and a core controller associated with the channel-switched core has a negligible propagation delay due to proximity to the channel-switched core, the core controller being designated as a global time keeper, each of the switching modules having a cyclic time counter of a predetermined period D, and any one of paths connecting a given module to other modules may be reconfigured by the core controller so that internal connections within the given module must be changed accordingly, **CHARACTERIZED** by:

broadcasting from the care controller a reconfiguration request message which includes a target time T at which connection reconfiguration at the channel-switched core will occur; and
receiving the broadcast target time at each module affected by the reconfiguration and performing necessary connection changes at a time selected so that the data transmitted by each module after the connection changes occur arrive at the channel-switched core at the target time T, and the data are routed according to the re-arranged paths at the channel-switched core.

The core is reconfigured in response to reconfiguration requests sent from the edge modules. The reconfiguration requests are based on data traffic volumes.

The steps of reconfiguration include:

(1) traffic monitoring at ingress edge modules;
(2) communication of traffic data to core modules;
(3) selecting the space switches from which unused connections are to be released and the space switches through which new connections are to be established;
(4) timing the rearrangement of the space switches and source-module links; and
(5) reconfiguration at the ingress edge modules according to instructions received from core module controllers.

Each ingress edge module monitors its spatial traffic distribution and determines its capacity requirement to each egress edge module, each connection being defined in units at a full channel capacity. The channel capacity is indivisible. An ingress edge module generates a table that indicates the preferred core module for a channel to each egress edge module. The method of generating the table is based on topology information. An edge module selects a preferred core module and communicates with the selected core module to request the ingress/egress capacity reallocation. Each core module aggregates all the connectivity-change requests from all ingress edge modules and periodically implements a reconfiguration procedure. The outcome of such a procedure is a list of new connections for one or more of its space switches. Entries in the list that correspond to each ingress edge module are communicated accordingly. The edge modules perform their own reconfiguration procedure, when required.

In order to distribute the computational effort at the edge modules, the core modules stagger their reconfiguration implementation so that only one of the core modules is reconfigured at a time. The core modules reconfigure in a round robin discipline. A sufficient time period is allowed for each reconfiguration. Once a core module has completed its reconfiguration task, if any, it sends a message to a next core module permitting it to proceed with the reconfiguration process. Such a message is not required if a core module uses its full reconfiguration-time allocation. The timing process is preferably enabled by the collocation of a selected edge module with each core module.

In accordance with yet a further aspect of the invention, there is provided a method of channel-switching data packet streams received on inner links from fast-switching edge modules using optical space switches in a core module of a geographically distributed packet switch, **CHARACTERIZED** by:

using uncommitted connections in the optical space switches to configure new connections in the optical space switches in response to reconfiguration requests received from the fast-switching edge modules; and
instructing the fast-switching edge nodules to switch from unused inner channels to the new connections reconfigured in the core module, without interrupting data transfer from the source edge-modules.

**BRIEF DESCRIPTION OF THE DRAWINGS**

FIG. 1a is a schematic diagram of a hybrid switch comprising a channel switch and a data switch interconnecting a bank of electronic modules;
FIG. 1b is a schematic diagram of a hybrid switch functionally equivalent to the hybrid switch of FIG. 1a with the edge modules performing the data-switching function;
FIG. 2 is a schematic diagram of a switch having a bank of edge modules interconnected by a fully-connected core comprising a bank of space switches;
FIG. 3a is a schematic diagram of a partially-connected space switch core having double the capacity of a corresponding switch with a fully-connected core shown in FIG. 2;
FIG. 3b is a simplified representation of the partially-connected core of FIG. 3a, showing the wavelength assignment in a wavelength division multiplexed (WDM) core;
FIG. 3c is a schematic diagram of a partially-connected space switch which is a mirror-image of the switch of FIG. 3a;
FIG. 4 is a simplified representation of a partially-connected core of four times the capacity of a corresponding fully-connected core constructed with the same space switches, the wavelength assignment in a WDM implementation being indicated;
FIG. 5a shows the connectivity of a partially-connected core with reference to one of the space switches;
FIG. 5b shows the connectivity of a partially-connected core with reference to one of the space switches, the core connectivity being a mirror-image of the connectivity related to FIG. 5a;
FIG. 6 is a schematic diagram of a hybrid distributed switch showing the control elements;
FIG. 7 shows the connection of a module hosting a global controller to the partially connected switch core shown in FIG. 3a;
FIG. 8 illustrates a data structure used for connection routing in a switch with a fully-connected core;
FIG. 9 illustrates a data structure used for connection routing in a switch with a partially-connected core;
FIG. 10 is a schematic diagram of a connection request queue used in the global controller for processing connection requests from subtending data sources;
FIG. 11 is a schematic diagram of a progress queue used by the global controller to track connections in progress;
FIGs. 12a-d illustrate the process of switch core reconfiguration;
FIGs. 13a and 13b illustrate the process of time-indication alignment at the edge modules;
FIGs. 14a and 14b illustrate the phase discrepancy between a global timing counter and a timing counter associated with a module, with both counters being up-counters;
FIGs. 15a and 15b illustrate the phase discrepancy between a global timing counter and a timing counter associated with a module, with both counters being down-counters;
FIG. 16a illustrates misalignment of a global timing counter and a timing counter associated with a module where the former is an up-counter and the latter is a down counter;
FIG. 16b illustrates the alignment of a global timing counter and a timing counter associated with a module, the former being an up counter and the latter being a down counter;
FIG. 17 is a schematic diagram of a control circuit used at an egress port for a control channel connecting each module to a module that hosts a global controller for a distributed switch;
FIG. 18 is a schematic diagram showing the architecture of a generic switch comprising ingress edge modules, an optical switching core having multiple parallel space switches, and sink edge modules;
FIG. 19 is a schematic diagram showing the switch architecture illustrated in FIG. 18, but with the source and sink edge modules paired to share integrated source-sink edge modules;
FIG. 20 is a schematic diagram of a switch derived from the architecture shown in FIG. 18, with the core being partitioned into a number of independent core modules;
FIG. 21 is a schematic diagram showing an association of collocated source and sink edge modules, with respective core modules as illustrated in the switch architecture shown in FIG. 20;

FIG. 22 is a schematic diagram illustrating a reconfiguration process in a core module that includes only one space switch;

FIG. 23 is a schematic diagram of a data structure used by edge-module to request connectivity changes in the core modules of the switch architecture illustrated in FIGs. 18 and 19;

FIG. 24 is a schematic diagram illustrating the organization of configuration change requests at a core module and the format used by the core module to report a release list and connection list to the edge modules;

FIG. 25 is a schematic diagram of a data structure used by a core controller to determine connectivity-pattern changes for the purpose of reconfiguration of connections in the core module;

FIG. 26 is a flow chart of a process for determining core connectivity changes in a switch having negligible switching delay using adaptive-pattern packing;

FIG. 27 is a flow chart of a process for determining core connectivity changes in a switch having a significant switching delay using adaptive-pattern packing;

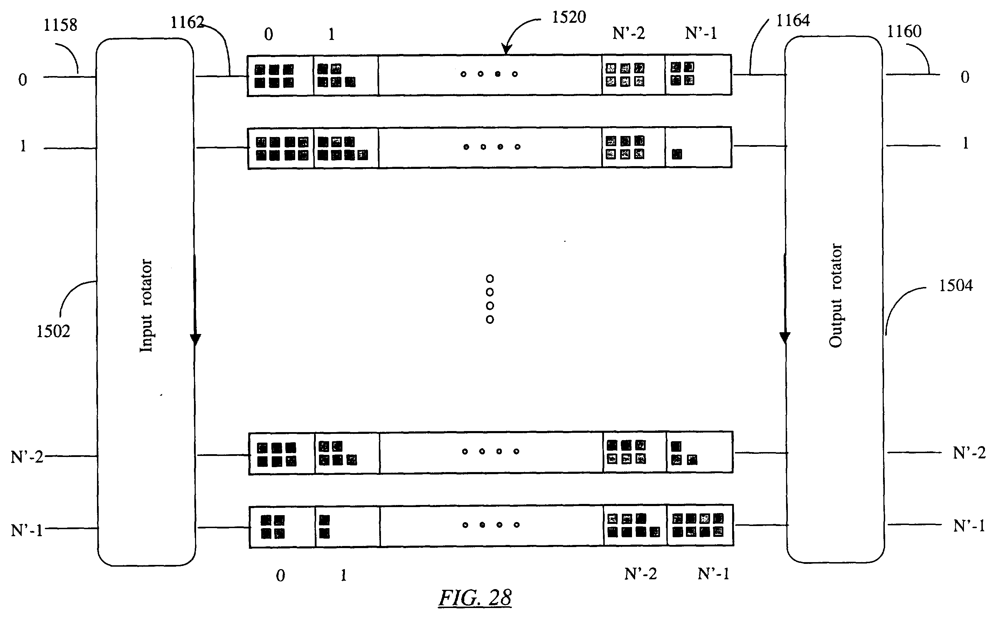

FIG. 28 is a schematic diagram illustrating an architecture of a rotator-based edge module;

FIG. 29 is a schematic diagram illustrating relative timing of the connectivity of the rotator-based edge module shown in FIG. 28;

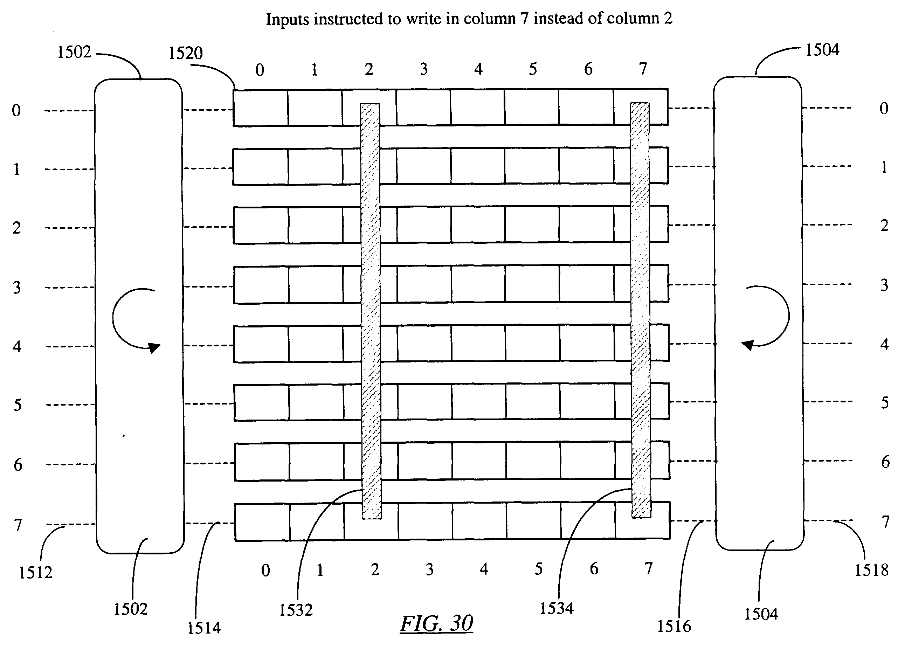

FIG. 30 is a schematic diagram illustrating the reconfiguration at an ingress edge module; and

FIG. 31 is a schematic diagram illustrating a memory access timing discipline applied during a reconfiguration of the edge module shown in FIG. 30.

## DETAILED DESCRIPTION OF THE PREFERRED EMBODIMENTS

### Definitions

Source module and sink module: With respect to a given connection between a traffic source and a traffic sink, a source module is the module supporting the traffic source and a sink module is the module supporting the traffic sink.

Link: A physical transmission medium between a signal transmitter and a receiver; for example, an optical fiber.

Channel: A designated allotment of the capacity of a link between a signal transmitter and a receiver; for example, a wavelength in a wavelength division multiplexed (WDM) optical fiber.

Path: Two or more concatenated channels form a path.

Connection: A reserved portion of a path.

Connection routing: The process of selecting a path between a source module and a sink module.

Channel assignment: The process of selecting the channels to form a path.

Multiplex: A number of channels multiplexed in at least one transmission medium.

Incoming multiplex: A multiplex arriving at a switching device.

Outgoing multiplex: A multiplex emanating from a switching device.

Reconfiguration guard time: A time interval during which no data is transmitted over a connection in order to account for transient periods during a reconfiguration of connections.

Ingress port: Port of a switching module receiving data from subtending data traffic sources.

Egress port: Port of a switching module transmitting data to subordinate data traffic sinks.

Core-input channel: A channel from a switching module to a switch core.

Core-output channel: A channel from switch core to a switching module.

Module-pair capacity: In a directly interconnected module pair, the lesser of a sending capacity of a first module and a receiving capacity of a second module in the pair.

Fully-connected module-pair: A directly connected module pair which is connected by a set of paths having a combined capacity equal to the module-pair capacity. The paths may be shared by other module pairs.

Partially-connected module-pair: A directly connected module pair connected by a set of paths having a combined capacity which is less than the module-pair capacity.

Fully-connected switch: A switch in which all module pairs are fully connected. In a fully-connected switch, the paths connecting any given module pair may be congested under certain traffic conditions.

Partially-connected switch: A switch in which some module pairs are partially-connected pairs.

Normalized traffic unit: A dimensionless traffic unit defined as the data rate divided by a channel capacity. The data rate and the channel capacity are normally expressed in bits per second.

Clock period: A time interval between successive clock pulses.

Time-counter period: A period D of a digital counter used to indicate time. The period D is less than or equal to $2^C$, C being a word length of the counter.

Data switch: A data switch receives data from a number of incoming channels, identifies predefined data units, and directs the data units to respective outgoing channels. Data switches include telephony switches, frame-relay switches, ATM switches, and IP routers. In a network based on data switches, the inter-switch channel allocation is fixed.

Channel switch: A memoryless switch that connects any of a number of incoming channels to any of an equal number of outgoing channels without examining the data content of any channel. The interconnection may be effected by a bank of space switches, and the interconnection pattern may be modified. However, an interval between successive interconnection reconfigurations is preferably much longer than a mean transfer time of a data unit. For example, in a data packet switch, the mean packet transfer time may be of the order of 400 nsec while the mean channel switching period would be of the order of a few milliseconds. In a network based on channel switches, the inter-module channel allocations are time-variant. End-to-end paths whose capacities match the respective end-to-end data traffic are formed by rearranging the connectivity of the channels.

Data traffic routing: Data traffic routing is the process of directing an identifiable data unit or a stream of such units to a path selected from a set of two or more paths. The path is predefined and may comprise a number of concatenated channels, each channel having a defined point of origin and a defined destination.

Module-state matrix: A $2 \times N$ matrix, where N is the number of modules. Entry $(0, j)$, $0 \leq j < N$, stores the combined available vacancy on all channels from a module j to the channel-switching core and entry $(1, j)$, $0 \leq j < N$, stores the combined available vacancy on all channels from the channel-switching core to the module j.

Channel-vacancy matrices: A matrix having a number of columns equal to the number of incoming multiplexes and a number of rows equal to the number of space switches. Each entry in the matrix is initialized by a number representative of the capacity of a channel and dynamically stores a respective available capacity.

Vacancy matching process: A first channel vacancy matrix and a second channel-vacancy matrix are compared to determine the lesser of two corresponding entries. The first matrix stores the available capacity in each channel from an incoming multiplex to channel switch core. The second matrix stores the available capacity in each channel from the channel switch core to an outgoing multiplex. Comparing two columns of the first and second matrices determines the available capacity between respective incoming and outgoing multiplexes.

Inner channel: A channel from an ingress edge module to a core module or a channel from a core module to an egress edge module.

Outer channel: An incoming channel to an ingress edge module or an outgoing channel from an egress edge module.

Inner capacity: The number of inner channels of an ingress edge module or an egress edge module.

Outer capacity: The number of outer channels of an ingress edge module or an egress edge module.

Connection: A path from an ingress edge module to an egress edge module, the path including two concatenated channels. A channel is not divisible and may correspond to a wave-length in a wave division multiplexed (WDM) network.

Committed connection: A connection between an ingress edge module and an egress edge module with capacity reserved by admission-control (whether user or network initiated).

Connection reconfiguration: Replacement of a connection between an ingress edge module and an egress edge module by a connection from the ingress edge module to another egress edge node-ule.

Released connection: A connection that is no longer required by an ingress edge module, as identified in a reconfiguration request.

Target connection: A connection identified in a reconfiguration request, as a replacement for a connection that is no longer required.

Uncommitted connection: A connection between an ingress edge module and an egress edge module that is assigned by the network, without admission-control interference, but can be gracefully released by instructing a sending ingress edge module to discontinue sending data through the connection.

Protected traffic: Traffic that uses committed connections.

Unprotected traffic: Traffic that uses uncommitted connections and, possibly, committed connections at an uncommitted rate.

Active port: A port (input or output) in a space switch that is part of a committed connection.

Idle port: A port (input or output) in a space switch that is part of an uncommitted connection. Any idle input port and idle output port on the same core switch can form an uncommitted connection.

Space switch occupancy: The number of active ports in a space switch.

Space-switch vacancy: The number of idle ports in a space switch.

Permutation: A permutation is any set of N connections in an $N \times N$ switch.

Reconfiguration-request array: An array sent by an edge module to a core module indicating desirable connectivity changes. A first entry in the array is the number of changes required. The first entry is followed by a number of segments equal to the number of the requested changes. A segment has three fields: an identifier of a sending ingress edge module, an identifier of a current egress edge module, and an identifier of the desired egress edge module.

Release and connection space switch: A reconfiguration process releases a connection between an ingress edge module and an egress edge module from a release space switch and replaces it with a connection between the same ingress edge module and a different egress edge module through a connection space switch.

Release array: An array constructed at a core module controller using the reconfiguration-request arrays received from the ingress edge modules. The array contains data related to released connections.

Connection array: An array constructed at a core module from the reconfiguration-request arrays received from the ingress edge modules. The array contains data related to redirected connections.

Connectivity matrix: A matrix of N rows and M columns, N being the number of edge modules and M the number of space switches in a core module. An entry in the matrix at row j and column k indicates the output port to which input port j is connected in space switch k.

Connectivity array: A column in the connectivity matrix is referred to as a connectivity array. A connectivity array is associated with a specific space switch, and the $j^{th}$ entry in the array is the identifier of an output port to which input port of identifier j is connected. A connectivity array {a, b, c, d} indicates that input "0" is connected to output "a", input "1" is connected to output "b" and so on.

Space-switch-occupancy array: An array of M entries indicating the number of idle input ports in respective space switches in a core module.

Space-switch pointer array: An array of M entries, each entry containing an identifier of a space switch in a core module, with successive entries having space switch identifiers sorted according to the occupancy of corresponding space switches.

Packing list: A list for storing an order in which space switches in a core module are to be considered for reconfigured connections. The list includes a number of divisions equal to the number of space switches to be reconfigured. A first entry in the list contains the number of divisions. The divisions are generally of unequal length. Each division has a number of segments that indicate the new connections to be effected. The first field in a division indicates the number of segments in the division. The segments are of equal length, each containing four fields identifying, respectively, a space-switch input port, a space-switch output port, current space-switch and new space switch.

Space-switch packing: A space switch having an idle input port x and an idle output port y is packed by migrating a connection between input port x and output port y from another space switch in the same core module supporting the same connection.

Congruence level: The number of equivalent entries in two connectivity arrays is the congruence level of the respective space switches in a core module. For example if the connectivity array of two 8 × 8 space switches are {1, 4, 7, 2, 5, 6, 3, 0} and {1, 4, 7, 3, 5, 6, 0, 2}, then their congruence level is 5. This is the number of congruent connections in the two space switches. Respective entries in the connectivity arrays are considered equivalent if either of the two entries is a null entry, representing an uncommitted connection. Thus, connectivity arrays {1, 4, 7, 2, 5, **8**, 3, 0} and {1, **8**, 7, 3, 5, 6, 0, 2}, where the number 8 represents a null entry (an uncommitted connection), also have a congruence level of 5. (The number 8 is used to identity a null entry since the input or output ports of a space switch are numbered as 0 to 7 in this example.)

Fast switching: The ability of a switch to reconnect an input to a specified output in a relatively short period of time, for example, in a few nanoseconds. The distinction between fast and slow switching is subjective. A switch may be considered slow if the product of the input-port data transfer rate and the interval of time required to switch an input port to a new output port is large, e.g., of the order of 10,000 bytes.

Fast reconfiguration: Frequent core reconfiguration with a relatively short interval between successive reconfiguration processes, for example every 10 milliseconds.

A first embodiment of the present invention provides a hybrid switch that combines the benefits of a channel switch with the benefits of a data switch. In a self-configuring switch in accordance with the invention, the control system enables the creation of inter-module paths, and controls the routing of connections to existing or new paths. The path configuration is changed slowly, in milliseconds for example, thus providing the switch control system sufficient time to compute required core path reconfigurations.

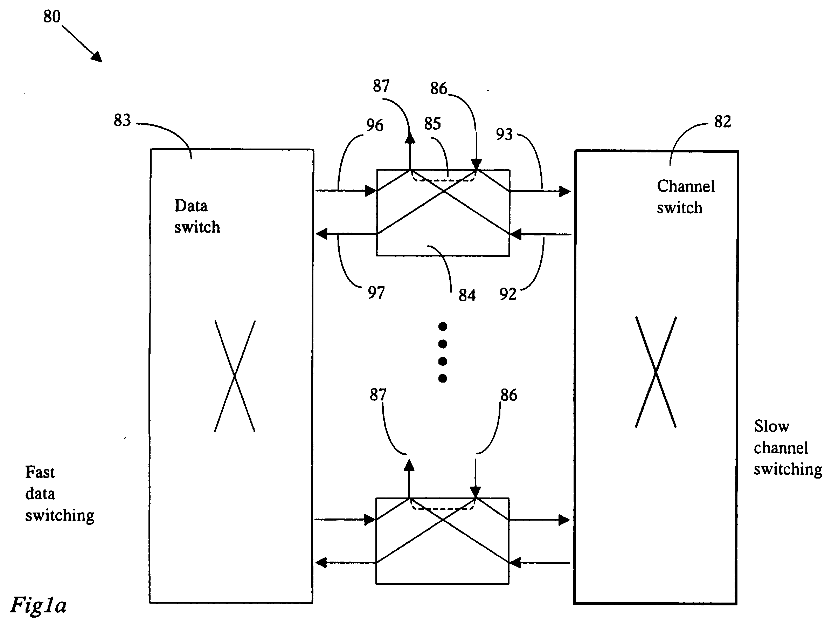

FIG. 1a is a schematic diagram of a hybrid switch in accordance with the invention which includes N electronic modules 84, a channel switch 82 and a dedicated data switch 83 which switches only tandem connections. Each module 84 receives data traffic from subtending traffic sources through incoming feeder links 86 and delivers data traffic destined to subordinate sinks through outgoing feeder links 87. Local subtending data traffic is switched directly to subordinate sinks through each module 84 as indicated by the dashed line 85. Each module 84 receives W incoming channels 92 from the channel switch 82, and sends W channels 93 to the channel switch 82. Each module 84 also receives B channels 96 from the data switch 83 and sends B channels 97 to the data switch 83.

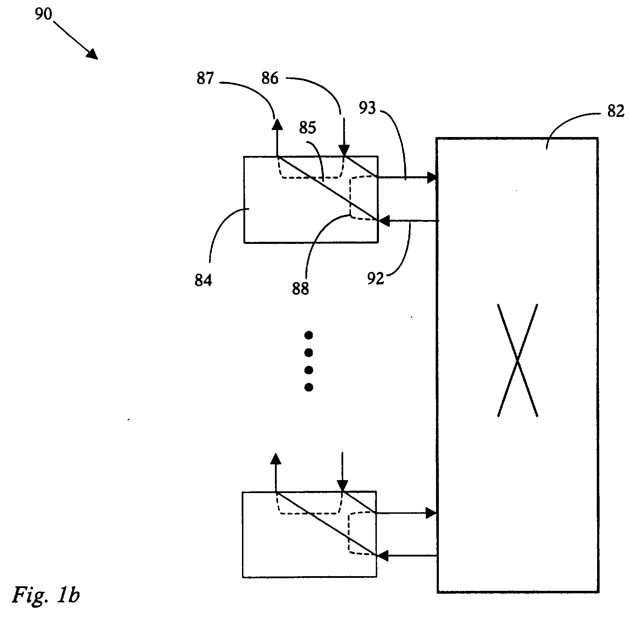

FIG. 1b is a schematic diagram of a hybrid switch similar to that shown in FIG. 1a, except that the data switch 83 is eliminated and tandem data switching is performed at the edge modules as indicated by the dashed line 88 of FIG. 1b. The configuration of FIG. 1b enables higher efficiency than that of FIG. 1a due to the sharing of channels 92 and 93 by direct traffic and tandem switched traffic.

## High-Capacity Core

The capacity of a switch based on a space switch core augmented by tandem switching can be expanded to a high capacity because the space switch connectivity requires reconfiguration less frequently, if complemented by tandem switching. The capacity of the space switch itself is, however, a limiting factor. Further capacity growth can be realized using a parallel arrangement of space switches. Using optical space switches, and with wavelength-division multiplexing, the parallel space switches may operate at different wavelengths in a manner well known in the art.

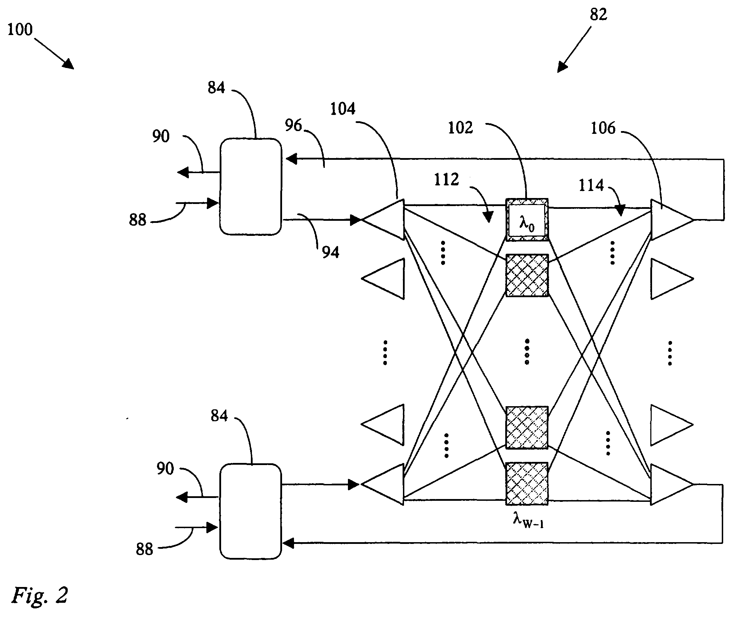

FIG. 2 is a schematic diagram of a wavelength-multiplexed switch 100 in accordance with the invention having a known configuration of a wavelength-multiplexed space switch core 82. The space switch core 82 includes a bank of W identical (n × n) space switches 102, each space switch 102 having n inputs and n outputs, n > 1, each input being a channel of a predefined wavelength. All inputs to a given space switch 102 are of the same wavelength. Demultiplexer 104 separates the multiplexed channels in incoming multiplex 94 into individual channels 112, which are routed to different space switches 102 according to their respective wavelengths. The switched channels at the output of each space switch 102 are connected to multiplexers 106 and the multiplexed switched channels are grouped in at least one outgoing multiplex 96 and returned to the ingress/egress modules 84. The input-output connection pattern for each space switch 102 is determined by a global controller that is described below in more detail.

The capacity of the switch 100 is limited by the capacity of each of the space switches 102 and the number of channels in each incoming multiplex 94. The number of core-output channels grouped in at least one outgoing multiplex 96 is preferably equal to the number of core-input channels grouped in at least one incoming multiplex 94.

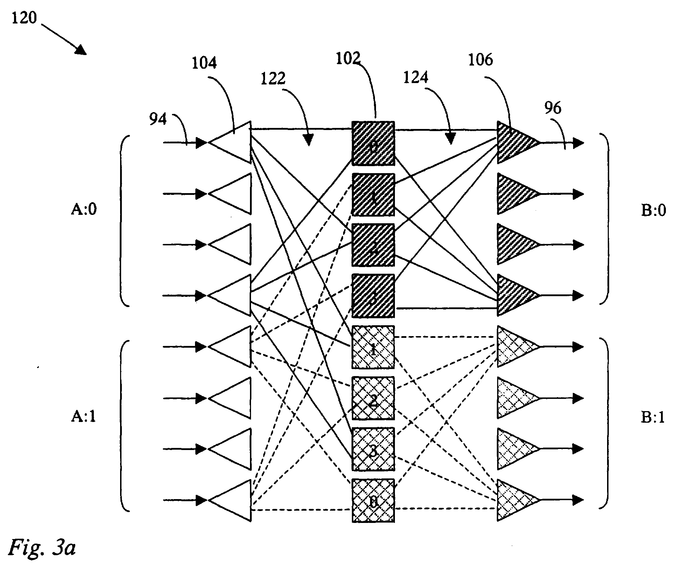

FIG. 3a shows an example of a wavelength multiplexed space switch core 120 with a number of space switches 102 larger than the number of channels in an incoming multiplex 94. In this example, each incoming multiplex comprises four channels and the demultiplexed channels are routed to four inner links 122. Sets of four inner links 124 are wavelength multiplexed onto outgoing multiplexes 96. The incoming multiplexes are divided into two groups labelled "A:0" and "A:1". The outgoing multiplexes are divided into two groups labelled "B:0" and "B:1". The channels of an incoming multiplex are divided as shown so that some channels are routed to outgoing multiplex "B:0" and the remaining channels are routed to outgoing multiplex "B:1". With equal group sizes, and with even division of the internal channels 122, the maximum number of channels that an incoming multiplex can switch to a given outgoing multiplex equals the number of channels of the incoming multiplex divided by the number of groups of outgoing multiplexes. The numerals shown in space switches 102 represent the respective wavelengths they switch. The pattern of wavelengths switched by the lower group of the space switches 102 is a shifted pattern of the wavelengths switched by the space switches 102 in the upper group.

If the channels of an incoming multiplex are wavelength multiplexed, each space switch 102 is associated with a wavelength and the space switches are arranged according to their designated wavelength in such a way as to avoid the duplication of any wavelength in any outgoing multiplex.

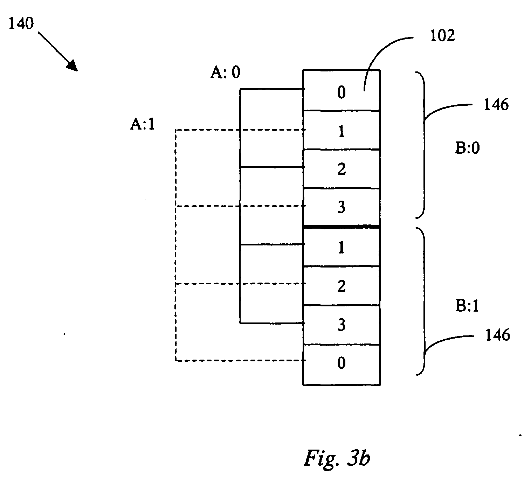

FIG. 3b is a simplified representation of the configuration shown in FIG. 3a.

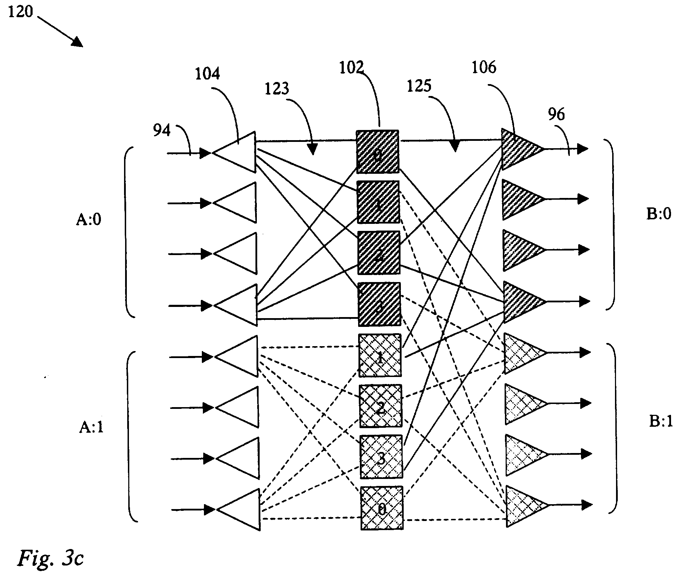

FIG. 3c shows the same example described with reference to FIG. 3a, except that the connection pattern between the input demultiplexers and the space switches and the connection pattern between the space switches and the output multiplexers are reversed. The space switch cores shown in FIGs. 3a and 3c are functionally equivalent.

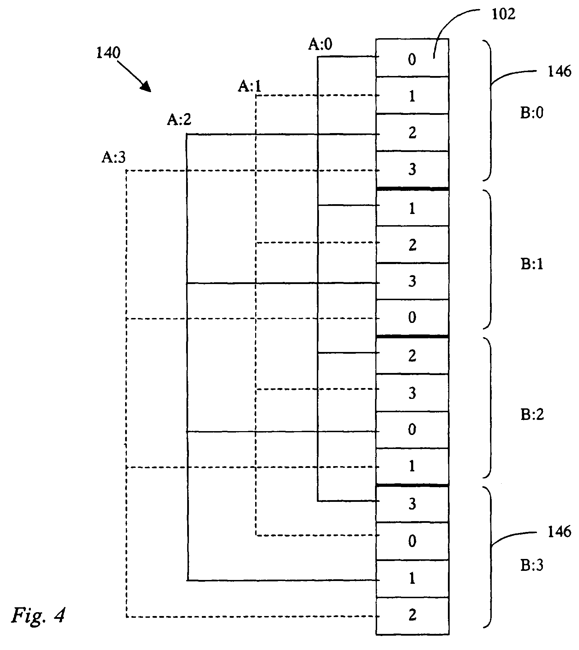

FIG. 4 illustrates a configuration in which the number of edge modules is four times the number of input ports for each space switch 102. In this configuration, the edge modules are logically divided into four groups. The space switches 102 are also logically divided into four groups, as are the outgoing multiplexes. Each edge module routes only a quarter of its channels through the space switch core to any group. Likewise, each module can route at most one quarter of its channels through the core to any other edge module. Greater inter-module connectivity is realized through tandem switching. The space switches in each group are arranged in a shifted pattern in accordance with the wavelengths they switch. The channels of each incoming multiplex are distributed equally among the four groups of space switches. FIG. 4 shows 16 space switches 102 divided into four groups. The respective groups switch wavelengths {0, 1, 2, 3}, {1, 2, 3, 0}, {2, 3, 0, 1}, and {3, 0, 1, 2}. The incoming multiplexes are divided into four groups labelled A:0 through A:3, and each group includes four incoming multiplexes. The outgoing multiplexes are divided into four groups labelled B:0 through B:3, and each group includes four outgoing multiplexes. Each group of space switches is directly associated with a group of outgoing multiplexes. Each incoming multiplex has four channels. The channels of each incoming multiplex in group A:0 are assigned to corresponding space switches 102 in the four groups of space switches. For example, the four channels of an incoming multiplex belonging to group A:0 are assigned to the first space switch in each of the space switch groups B:0 through B:3. As is apparent, this arrangement of the core ensures that there is no duplication of a wavelength in any outgoing multiplex.

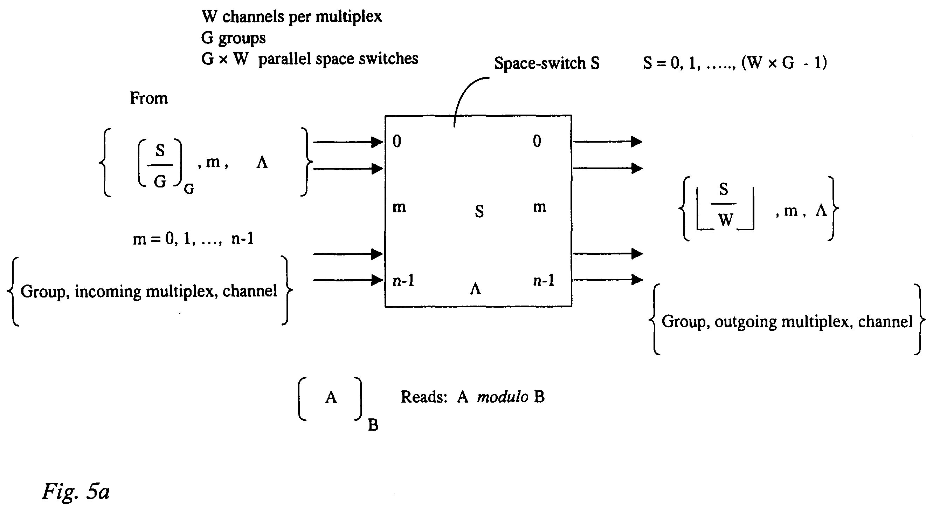

FIG. 5a depicts the connection pattern for any channel switch assembled with G groups, G > 0, numbered 0 to G-1. Each incoming and outgoing channel is identified by a group number, a relative multiplex number within the group, and a channel number. There are $G \times W$ space switches, numbered sequentially from 0 to $G \times W - 1$. FIG. 5a relates to space switch number S which is associated with wavelength $\Lambda$. A link 122 from group number $[S/G]_G$ (the ratio S/G modulo G), multiplex number m, and a channel corresponding to wavelength $\Lambda$ connects to input port m of space switch S, $0 \leq m < n$, $0 \leq S < G \times W$. An output port m of switch S is connected by link 114 to channel corresponding to wavelength $\Lambda$, in multiplex m, in group $\lfloor S/W \rfloor$, where $\lfloor u \rfloor$ denotes the integer part of a real number u. For example, in FIG. 3a, wavelength number 3 in multiplex 3 in group 0 is connected to input port number 3 in space switch number 6, while output port number 3 in space switch number 6 is connected by a link 124 to wavelength number 3 in outgoing multiplex number 3 in group 1.

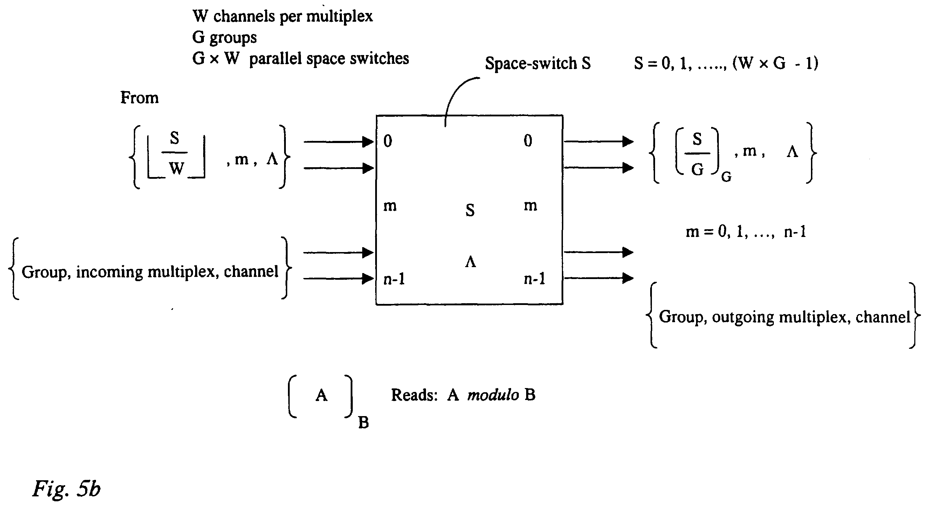

FIG. 5b shows the connection pattern for a channel switch core with a connectivity that is a mirror image of the connectivity of the channel switch core represented in FIG. 5a.

## Control Mechanism

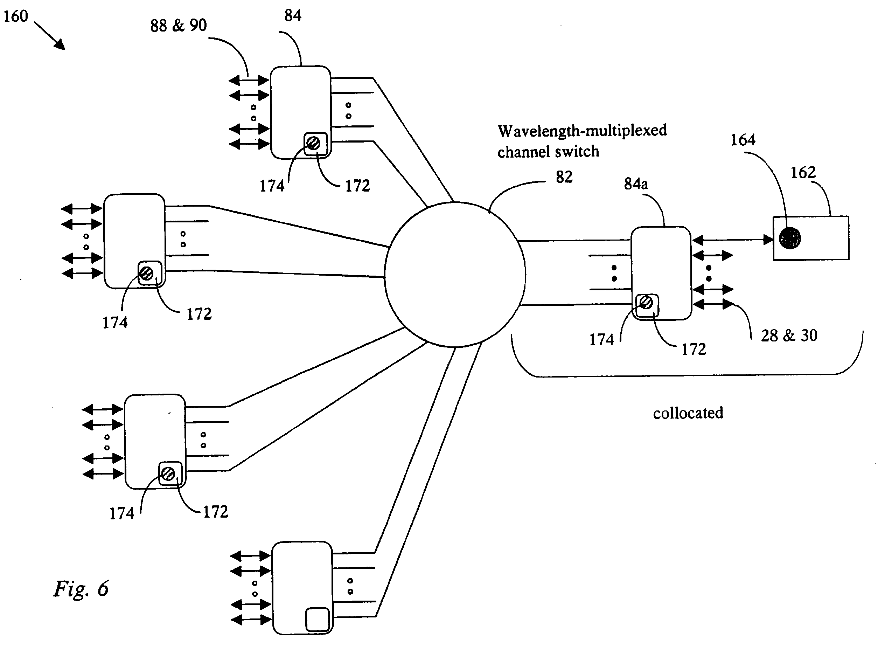

As described above, in a hybrid switch in accordance with the invention, the channel switch core must be controlled to reconfigure in response to changes in traffic loads. FIG. 6 illustrates a mechanism for channel assignment and switching-time coordination in a hybrid switch schematically shown in FIGs. 1a and 1b. Several electronic data switch modules 84 are interconnected through a wavelength-multiplexed channel switch core 82. At least one of the modules 84a is collocated with the channel switch core 82 and hosts a global controller 162 which includes a time counter circuit 164. Global controller 162 receives traffic load information from each local controller 172 of modules 84, including its host module 84a, and determines desirable configuration changes for the core using an algorithm that is described below. In addition, controller 162 determines a time at which each reconfiguration of the core must occur. The global controller 162 periodically reviews the configuration of the switch to determine whether reconfiguration of the core is required. In order to provide the global controller 162 with traffic volume and timing data, each module 84 must have at least one path routed to module 84a, which hosts the global controller 162.

The configuration or reconfiguration of the connectivity of each of the space switches in the wavelength multiplexed space switch core 82 must be coordinated with corresponding switching processes in the modules 84. The time counter circuit 164 associated with the global controller 162 includes a global clock and a time counter (not shown). A time counter circuit 174 in each module controller 172 of each module 84, 84a includes a module clock and a time counter, preferably having an identical period to that of the global clock in time counter circuit 164. The global controller 162 communicates with the modules 84 to maintain a measurable difference between a value of each time counter in a circuit 174 and the time counter in circuit 164. The propagation delay between the modules and the global controller 162 must be taken into account in determining a core reconfiguration schedule. Without precise coordination between the modules 84 and the space switch core 82, some connections may be forced to an idle state for relatively long periods of time to ensure that data is not lost during a switch core reconfiguration.

The host module 84a switches payload data traffic as well as control data traffic. Global controller 162 is preferably connected to only one ingress/egress port of host module 84a. The egress port of module 84 connected to the global controller 162 is hereafter referred to as the control port of the module 84. Each channel directed to the global controller 162, carries timing data, hereafter called type-1 data, and traffic related or payload data, hereafter called type-2 data. Type-2 data is relatively delay-insensitive. The type-1 data must be transferred without delay, either according to a schedule or in response to a stimulus. At least one register stores the type-1 data and at least one buffer stores the type-2 data in each module 84. The traffic volume of the type-2 data is generally much greater than that of the type-1 data.

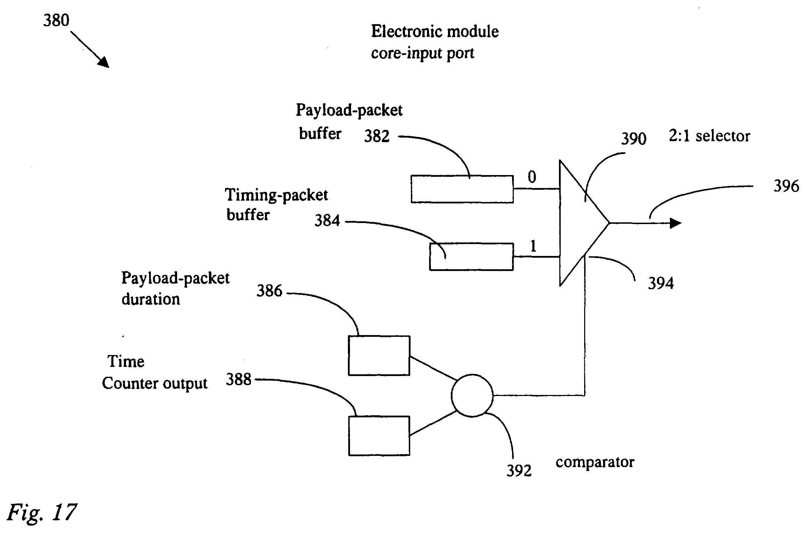

A selector enables data units from one of the buffers to egress at a given time. When a timing packet arrives, it must egress at a predefined time and transfer control must be exercised to ensure that the transfer of a packet from a type-2 buffer does not interfere with the transfer of the type-1 data. A transfer control circuit associated with the control port enables egress of the two traffic types while ensuring adherence to the strict time requirement of the type-1 data, as will be explained below in detail with reference to FIG. 17.

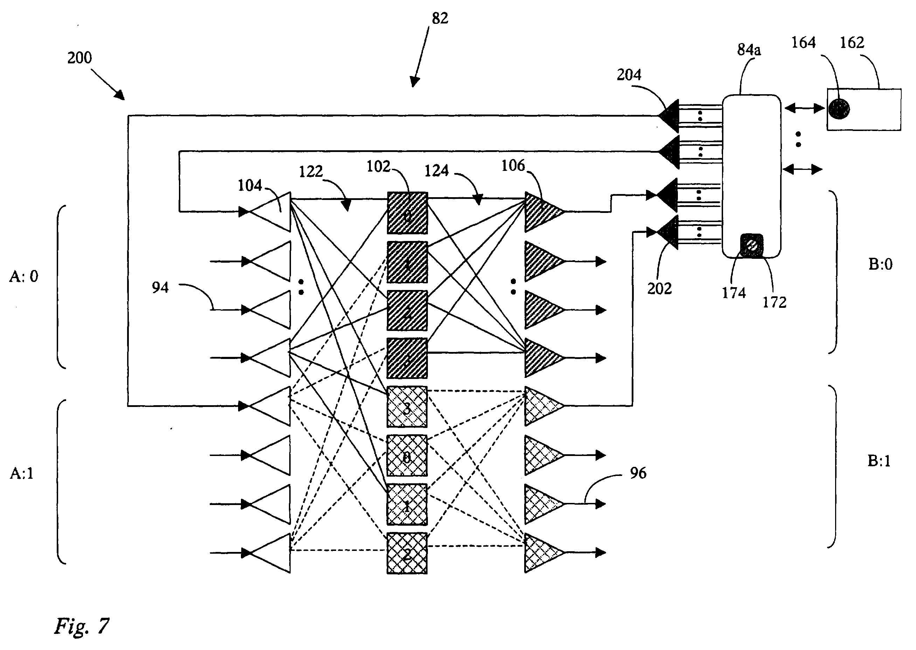

FIG. 7 illustrates the channel connectivity from each incoming multiplex 94 to module 84a which hosts the global controller 162. Each multiplex must provide at least one channel to module 84a in order to provide access to the global controller 162. The switch configuration shown in FIG. 3a is used in this example. An incoming multiplex and an outgoing multiplex connect each module to the space switch core. Each incoming multiplex 94 has one of its channels routed to one of two demultiplexers 202. A demultiplexer 202 is needed per group. The channel from an incoming multiplex 94 to a demultiplexer 202 carries control data units and payload data units. The control data units include both traffic load measurement data and timing data. Similarly, module 84a routes a channel to each outgoing multiplex 96.

## Channel-Switch Reconfiguration

Each module has a fixed number W of one-way channels to the core, and it receives a fixed number, preferably equal to W, of one-way channels from the core. The former are hereafter called A-channels, and the latter are called B-channels. A path from a module X to a module Y is formed by joining an A-channel emanating from module X to a B-channel terminating on module Y. Connecting the A-channel to the B-channel takes place at a core space switch. The number of paths from any module to any other module can vary from zero to W. The process of changing the number of paths between two modules is a reconfiguration process which changes the connection-pattern of module pairs. A route from a module X to another module Y may have one path or two concatenated paths joined at a module other than modules X or Y. This is referred to as a loop path. A larger number of concatenated paths may be used to form a route. However, this leads to undesirable control complexity.

If the core is not reconfigured to follow the spatial and temporal traffic variations, a high traffic load from a module X to a module Y may have to use parallel loop-path routes. A loop-path route may not be economical since it uses more transmission facilities and an extra step of data switching at a module 84, 84a. In addition, tandem switching in the loop path adds to delay jitter.

Reconfiguration of the core is performed concurrently with a connection-routing process. Two approaches may be adopted. The first, a passive approach, joins free A-channels to free B channels without disturbing connections in progress. The second, an active approach, may rearrange some of the connections in progress in order to pack the A-channels and B-channels and hence increase the opportunity of having free A channels and B channels to create a larger number of new paths. Rearrangement of a connection to free a channel is subject to the timing coordination required in any reconfiguration. It is noted that freeing an A-channel of a path while keeping the B-channel unchanged is a preferred practice since it does not require pausing of data transfer at the source module after a new path is created.

It is emphasized that the objective of reconfiguration is to maximize the proportion of the inter-module traffic that can be routed directly without recourse to tandem switching in a loop path. However, connections from a module X to a module Y which collectively require a capacity that is much smaller than a channel capacity preferably use loop-path routes. Establishing a direct path in this case is wasteful unless the path can be quickly established and released, which may not be feasible. For example, a set of connections from a module X to a module Y collectively requiring a 100 Mb/s capacity in a switch core with a channel capacity of 10 Gb/s uses only 1% of a path capacity. If a core reconfiguration is performed every millisecond, the connection from module X to module Y would be re-established every 100 milliseconds to yield a 100 Mb/s connection. This means that some traffic units arriving at module X may have to wait for 100 milliseconds before being sent to module Y. A delay of that magnitude is unacceptable and a better solution is to use a loop path where the data traffic for the connections flows steadily through a tandem switched loop path through one of the edge modules other than modules X or Y.

## Path Formation

Any of the channels belonging to an incoming multiplex has fixed connectivity with a predetermined set of space switches. Those channels may be paired with channels from the predetermined set of space switches to the outgoing multiplexes. The paired channels form inter-module paths. In a WDM core, each incoming or outgoing multiplex connects to W space switches, W being the number of wavelengths (channels) in each multiplex.

A module pair may be connected by an integer number of paths, ranging from zero to the number of channels in a multiplex. During a switch reconfiguration period, the number of paths connecting a module-pair may change, and new connections may be routed to existing or newly-created paths. It is also possible to reroute an existing connection to another path in order to free a path used by the connection and thus facilitate the formation of new paths between other module pairs.

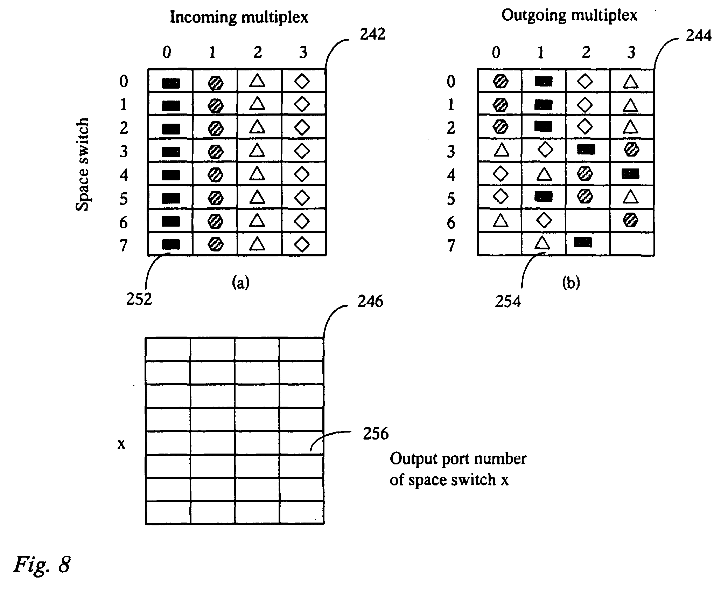

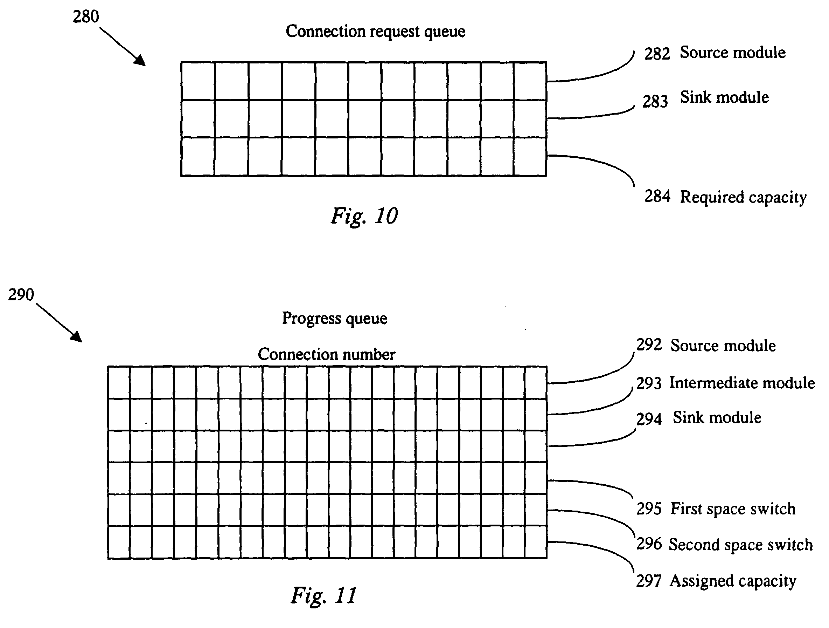

The channel assignment process will first be described for the fully-connected channel switch (G = 1) shown in FIG. 2. FIG. 8 illustrates memory tables used in the channel assignment process in switch 100 shown in FIG. 2. The example shown is that for four incoming multiplexes each including eight channels. Two matrices 242, and 244, are used to facilitate the assignment process. Matrix 242 stores indicators of the vacancies in incoming multiplexes and matrix 244 stores indicators of the vacancies in outgoing multiplexes. The symbols shown in FIG. 8 identify the channels of each multiplex. This is for illustration only, numeric values representative of the respective vacancies being used in an actual implementation of the assignment procedure. As shown, the four outgoing multiplexes 0, 1, 2, and 3 receive 0, 4, 2, and 1 channels, respectively, from incoming multiplex 0. The channel assignment process will be described below in more detail with reference to FIGs. 10 and 11. The outcome of the assignment process is stored in a matrix 246, each row of which corresponds to one of the space switches. Each entry in matrix 246 has a width of $\log_2 n$ bits (rounded up to nearest integer), n being the number of input ports in a space switch 102, and storing the identity of the output port of the same space switch 102 to which an input port is connected.

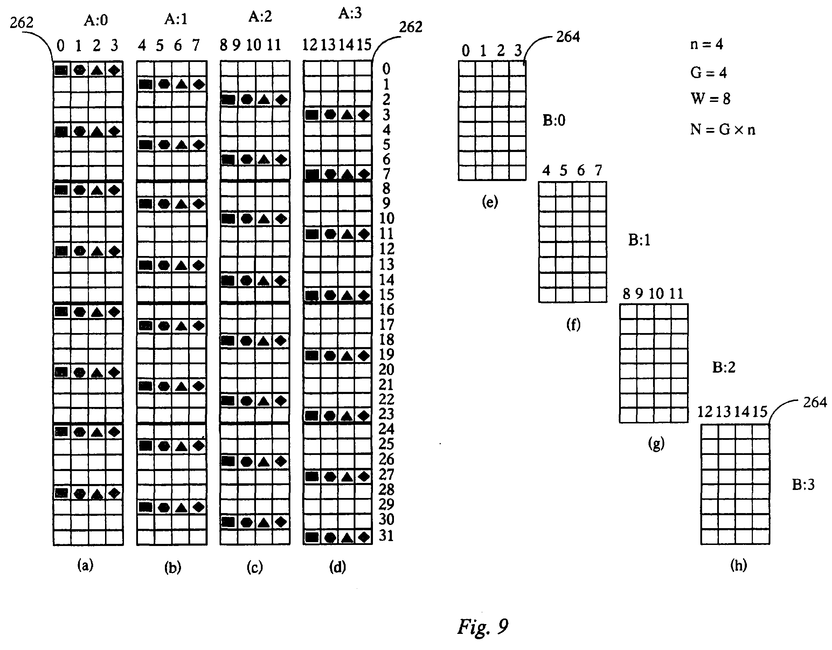

FIG. 9 illustrates the channel assignment process for an extended switch 140 shown in FIG. 4. In this example, there are 16 incoming multiplexes, each including 8 channels (W = 8). The incoming multiplexes are divided into equal groups (G = 4) labeled A:0, A:1, A:2, and A:3. The symbols used in the figure identify channels of corresponding incoming multiplexes in the four groups. A small space switch core is used here for ease of illustration. Typically, n = 16, G = 4, W = 128, i.e., $N = G \times n = 64$, leading to an inner capacity equal to $N \times W \times R = 8192 R$. With R = 10 Gb/s, this is 80 Tb/s.

A matrix 262 is used to indicate the unassigned capacity of input ports of a space-switch group to facilitate the channel assignment process. The four matrices 262 are represented separately for illustration only. The four matrices can be interleaved in a single 4×32 matrix. Each matrix 264 has $4 \times 8$ entries, each entry indicates the unassigned capacity in a respective output port of a respective space switch. The outcome of the assignment process is stored in a companion matrix 264 of $4 \times 32$ entries, each entry being $\log_2 n$ bits wide (rounded up) and storing the identity of an output port to which the respective input port is to be connected.

Referring to FIG. 8 and FIG. 9, a matching operation involves a simple comparison of two corresponding entries, one in matrix 242 (262 in FIG. 9) and the other in matrix 244 (264 in FIG. 9), followed by a subtraction if a connection is assigned. (Recall that G denotes the number of groups, n the number of inputs or outputs per space switch, and W is the number of channels per incoming or outgoing multiplex). The channel switch 82 is fully connected if G = 1, and partially connected if G > 1. The number of modules is $N = n \times G$. A fully connected channel switch 82 with N modules would require W space switches of N inputs and N outputs. The use of more than one group (G > 1) reduces the complexity of the space switch design and reduces the matching effort, but full connectivity is sacrificed.

A partially-connected channel switch cannot serve as a switch core unless augmented with tandem loop-path switching to handle spatial traffic variations. Full connectivity of the channel switch may be necessary during periods of severe spatial imbalance in data traffic loads. With partial connectivity, the disparity of module-pair loads can lead to a significant proportion of the traffic being forced into loop paths.

## Core Reconfiguration and Channel Assignment

As explained above, a connection is routed to a path between a source and a sink. A module 84 receiving a connection request from a subordinate traffic source (not shown) is a source module, and the module 84 hosting the sink (not shown) is a sink module. A direct path between a source module 84 and a sink module 84 comprises a channel from the source module to a space switch 102 in the switch core and a channel from the space switch 102 to the sink module. A tandem loop path between a source module and a sink module comprises two direct paths, one from the source module through a space switch in the core to an intermediate module, and one from the intermediate module through a space switch in the core to the sink module. The intermediate module is any module except the source and sink modules.

When a source module receives a connection request, it sends the request to the global controller 162 (FIG. 6). The global controller 162 routes connections to paths, and reconfigures the channel connections in the core as required to accommodate temporal and spatial fluctuations in traffic loads. Preferably, the connection routing process is performed periodically. The time between successive connection routing processes is preferably equal to a reconfiguration period. Connection requests received by each module 84, 84a from subtending traffic sources (not shown) are transferred to the global controller 162 for processing. Connection requests received by the global controller 162 from the modules during a reconfiguration period are preferably processed in a batch.

The channel assignment process includes the following steps:

(1) The global controller 162 maintains a $2 \times N$ module-state matrix (not shown) storing the free capacities of the N modules 84, 84a. One row of the matrix stores each module's available capacity on channels connecting the module to the core and the second row of the matrix stores the available capacity on channels connecting the core to each module.

(2) When a new connection request is sent from a module 84, 84a to the global controller 162, the sink module is identified. The corresponding entries in the module-state matrix are examined. If either entry is smaller than the connection capacity requested in the connection request, the connection request is placed in a standby queue (not shown). Otherwise, the connection request is entered in a connection request queue 280 shown in FIG. 10, and the entries in the $2 \times N$ module-state matrix are debited accordingly. Each entry in the connection request queue 280 includes three fields: a source module identifier 282, a sink module identifier 283, and a requested connection capacity 284. The standby queue has the same format as the connection request queue. The connection capacity requested is preferably represented as a fraction of a capacity of a channel. A 20-bit representation of the channel capacity, for example, permits an integer representation of each fraction with a relative accuracy within 1 per million. A request entered in the request queue may be accepted if an internal route can be found as described in the following steps:

(i) The request queue is sorted in a descending order according to capacity requirement before a matching process begins;

(ii) An attempt is made to find a direct path from the source module to the sink module for each connection request in the request queue. This involves carrying out a matching process as described above. The matching process is implemented for each entry in the request queue starting with the highest requested connection capacity. A request for a high connection capacity has fewer matching opportunities than a request for a small connection capacity. Thus, the requests for higher connection capacities are preferably processed before the available channel capacity is assigned to requests for low capacity connections.

Each time a connection request is successfully assigned, each of the corresponding entries in the channel-vacancy matrices (242, 244) or (262, 264) is decreased by the value of the assigned capacity. Each successful connection is deleted from the request queue, assigned an internal connection number, and entered in a progress queue. The internal connection number is selected from a pool of K recycled connection numbers in a manner well understood in the art. If all the K connection numbers are assigned, processing the request queue is stopped for the reconfiguration period in progress and resumes in subsequent reconfiguration periods. The number K is the maximum number of connections that can be supported at any given time. This value is selected to be sufficiently large to render the event of a full progress queue improbable. A full progress queue results in delaying the processing of the request queue until a subsequent reconfiguration period.

The progress queue preferably has K columns and six rows, and a column is indexed by the internal connection number. The six rows in the progress queue (FIG. 11) are used to store the source module identifier 292, intermediate module identifier 293 (if any), sink module identifier 294, space switch identifier 295 in first path, space switch identifier 296 in second path (if any), and capacity assigned 297, respectively. The intermediate module and second space switch entries are null in the case of a direct path. The progress queue is stored in a memory accessed by the global controller 162. When this step is complete, the request queue contains only the requests that could not be routed via direct paths.

(3) An attempt is made to find a loop path which requires tandem switching at an intermediate module as described above for any requests remaining in the request queue. The remaining connection requests are processed sequentially. The process includes a step of finding a matching path from the source module to an intermediate module and a matching path from the intermediate module to the sink module.

(4) Each request that can be assigned a loop path is deleted train the request queue, assigned an internal connection number as described above, and entered in the progress queue. A column corresponding to a loop path in the progress queue includes the source module identifier 292, the intermediate module identifier 293, the sink module identifier 294, the first connecting space switch identifier 295, the second connecting space switch identifier 296, and the capacity assigned 297.

(5) The remaining requests in the request queue are rejected in the current reconfiguration cycle and the respective capacities 284 indicated in the request queue are credited in the $2 \times N$ module-state matrix (not shown) as described in step(1) above.

(6) If any request is rejected in step 5, the queue of standby requests is examined to determine if any standby request can exploit the vacancy created by the rejected request. Steps 1 to 5 are repeated replacing the request queue with the standby queue. The standby queue is preferably sorted in a descending order according to the value of the requested connection capacity.

(7) When a connection is terminated, its assigned capacity is added to corresponding entries in the channel-vacancy matrices (242, 244) or (262, 264), and the 2 x N module-state matrix and the connection number is returned to the pool of recycled connection numbers. Thus, the corresponding column in the progress queue becomes available for use by a new connection. Initially the free-capacity arrays store the total internal capacity of the respective modules. The channel vacancy matrices are initialized to contain the capacity of a channel.

In order to increase the opportunity of accommodating future requests, the space switches should be scanned in a sequential order from 0 to W-1 in each matching attempt, and the intermediate modules in loop paths are attempted in a sequential order.

**Centralized Switch Reconfiguration**

In a centralized switch, edge modules are located in the vicinity of the space switch core and the propagation delay between each module 84 (FIG. 6) and the optical channel switch 82 may be sufficiently small to be contained within a relatively short reconfiguration guard time. The core reconfiguration process can be frequent, the constraint on the frequency being principally the speed of the global controller 162. The global controller 162 sends connection-change requests to all participating modules a given lead time prior to a reconfiguration target time T, the lead time being sufficient to permit each participating module to implement the required connection rearrangement by the target time.

## Distributed Switch Reconfiguration

It is desirable that the modules 84 be located close to their traffic sources and not necessarily in the vicinity of the space switch core 82. Consequently, the propagation delay between a module 84 and the space switch core 82 may be of the order of a millisecond or so. An interval of the order of a millisecond is too long to be practically and economically contained in a guard time.

Two main requirements stem directly from the variance of the delay from the modules to the channel switch. The first is the need to align the local time counter 174 at each module 84 with the global time counter 164 at the global controller 162, which is used as a reference time. The time counter alignment must be based on the individual propagation delays from each module to the space switch core 82. The second is a restriction on connection reconfiguration to account for a propagation delay variation between the space switch core 82 and the sink module. The latter requires that a traffic connection re-routed from a loop path to either a direct route or another loop path pause for a predetermined interval of time in order to ensure that no data in transit can arrive at the destination module after the data transferred to the destination module via the new route. A transfer from a direct path to a loop path or another direct path does not result in out-of-sequence data blocks.

## Selection of the Time Counter Period

The period D of a time counter (164, 174) must be at least equal to the sum of a largest propagation delay between any module 84 and the global controller 162 and a time allowance sufficient for any module to implement a connection reconfiguration.

## Timing Control

All clocks in the time counter circuits 164 and 174 (FIG. 6) are synchronized using techniques well known in the art. As noted above, time coordination is required to harmonize the switching function in the switch core 82 and the modules 84, 84a to ensure that no data units are lost during switch core reconfiguration.

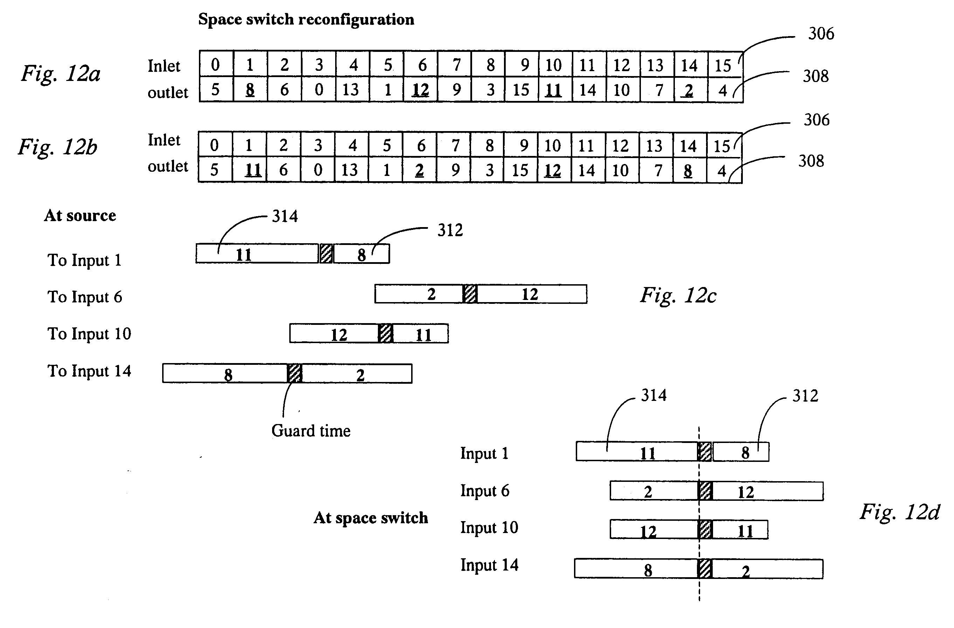

FIGs. 12a-d illustrate the time coordination performed during the reconfiguration process. In this example, each space switch in the core has 16 input ports and 16 output ports. Arrays 306 and 308 (FIG. 12a) show the input-output connectivity of a given 16-port space switch core 102 before and after reconfiguration. In this example, global controller 162 (FIG. 6) has determined that the space switch core connectivity should be reconfigured so that ingress module 1 connects to egress module 11 instead of egress module 8, ingress module 6 connects to egress module 2 instead of egress module 12, etc. The new connectivity in the switch core is shown in FIG. 12b. The required changes are shown in underline and bold type in FIGs. 12a and 12b and include inputs 1, 6, 10 and 14. The reconfiguration also requires a change in transfer buffer pointers (not shown) at the ingress modules 1, 6, 10 and 14 so that data units for the new destination are output on the respective channels after the reconfiguration shown in FIG. 12d. As shown in FIGs. 12c and 12d, packets 312 are the last packets that the affected ingress modules transmit through the core prior to reconfiguration, and packets 314 are the first packets transmitted through the core after reconfiguration. The separation between packets 312 and 314 represents a guard time to account for a reconfiguration transition delay at the space switch core 82 (FIG. 6). The packet streams from inputs 1, 6, 10 and 14 are sent at their local times T and arrive at the space switch core at global time T, as determined by collocated global time counter 164, in accordance with a transmit time coordination method in accordance with the invention.

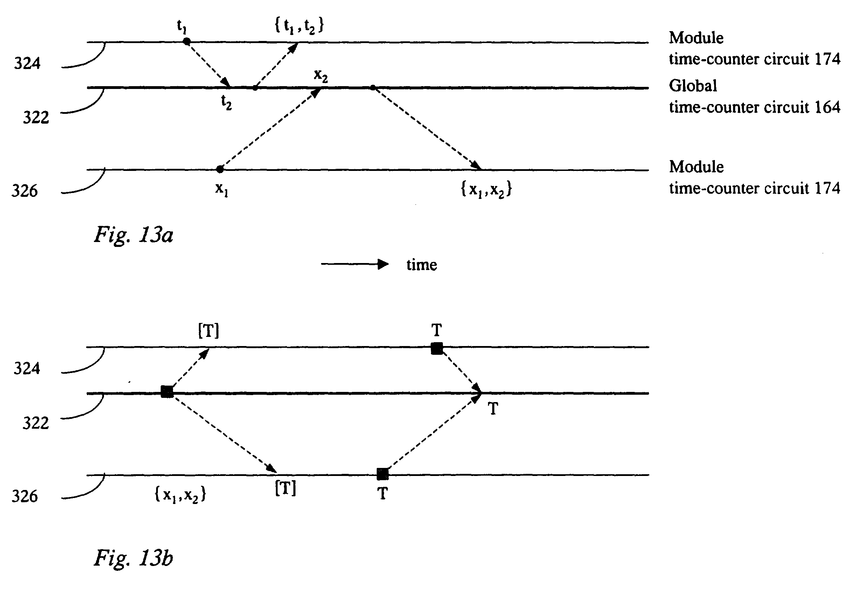

Timing packets are exchanged between each local time counter circuit 174 and global time counter circuit 164 of the global controller 162. Each module controller 172 transmits a timing packet when its local tine counter reaches zero. This may be performed each time the local time counter reaches zero, or after a predetermined number of cycles determined to be appropriate. All time counters have the same widths of C bits, 20 bits for example, with a counter period of $\delta \times 2^C$, $\delta$ being the clock period. The clock period is the same in all modules. For example, with C = 20 and $\delta$ = 100 nsec, the counter period is about 100 msec. The timing packet is sent to the global controller 162. Upon receipt of each timing packet, controller 162 stamps the packet according to the reading of global time counter 164. The stamped packets are queued and transmitted back to their source modules. The timing counter at the source module is reset to zero when it reaches a value determined according to the time stamp in the returned timing packet. The method of determining the resetting time is described in detail below. By doing so, a packet transmitted at local time X at any module will always arrive at the core channel switch at global time X. Thus, when the global controller 162 determines that reconfiguration of one of the space switches 162 is desirable, it computes a desirable time T for effecting the reconfiguration then it sends the value T in a reconfiguration packet to the affected modules as illustrated in FIG. 13b. The reconfiguration request packet sent to a module also contains relevant data on the new connectivity of the space switch. Preferably, the reconfiguration request packets are sent at global time "Ø" and the reconfiguration target time is specified as time T is equal to D. The module then performs the necessary internal switchover of traffic streams when its local time counter is equal to time T.

FIG. 13a illustrates an exchange of timing packets between a module 84 and the global controller 162. A module 84 sends a timing packet at time $t_1$, as indicated in the time axis 324. The packet is received at the global timing circuit 164 at time $t_2$, $t_2 > t_1$, as indicated on line 322. The value of $t_1$ need not be known to the global controller 162. The global controller 162 inserts the value $t_2$ in the timing packet and at some later instant returns the packet to the module 84. The module controller 172 is then aware of the values $t_1$ and $t_2$, and uses this information to adjust its local time counter 174. The time counters are cyclic and, as described above, $t_1$ may be zero for simplicity. Similarly, another module 84 transmits its timing packet to the global controller 162 at time $x_1$ as indicated on line 326. The timing packet is received at the global controller 162 at time $x_2$, as indicated on line 322. On receipt of the timing packet at time $x_2$, the global controller 162 time stamps the packet and returns it, as described above.

**Time Coordination Process**

FIG. 13b illustrates the time coordination process to enable paths to be reconfigured, necessitating changes in the core. The time coordination process requires that the global controller 162 issue a reconfiguration request packet that is multicast simultaneously to all participating modules. As indicated in line 322 of FIG. 13b, the global controller sends the reconfiguration request packets to two modules. The reconfiguration request packet includes the desired reconfiguration time T, in addition to the information on the new connectivity of the core. The local time T in the first module TCC 174, as indicated on line 324, and the local time T in the second module time counter 174, as indicated on line 326, differ in accordance with their propagation delays to the global controller 162. When each module transmits a bit at its local time T, the respective bits from the modules simultaneously reach the channel switch core at the global time T.

If the modules 84 and the channel switch core 82 are co-located, time coordination using the process described above is unnecessary. In that case, the global controller 162 may broadcast reconfiguration packets to all modules before the reconfiguration target time T, permitting a predetermined interval for implementing the reconfiguration changes required at the affected modules.

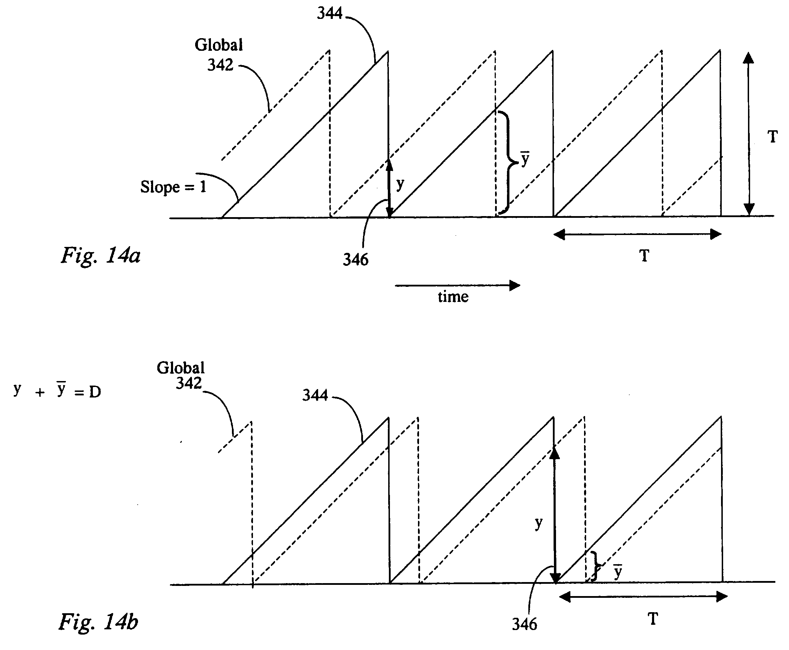

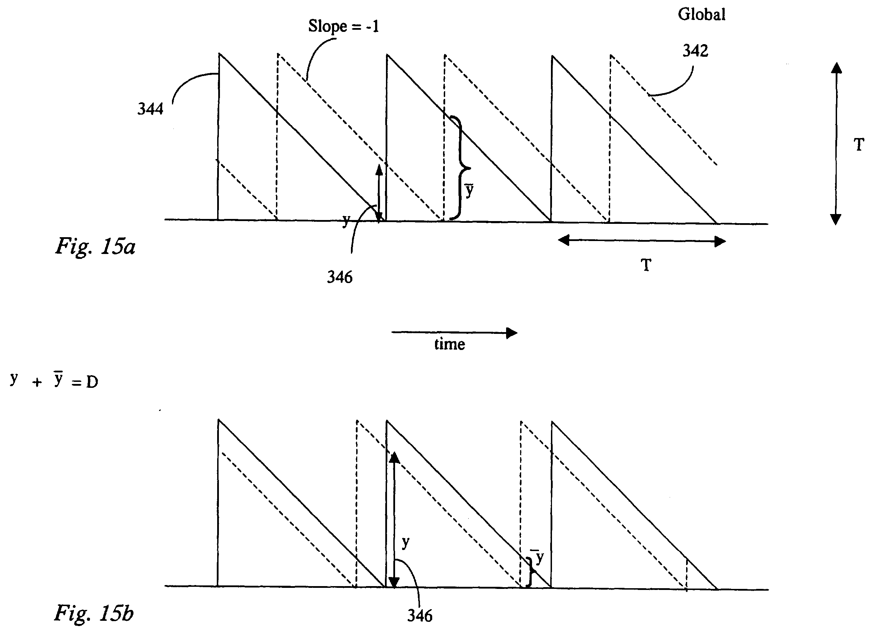

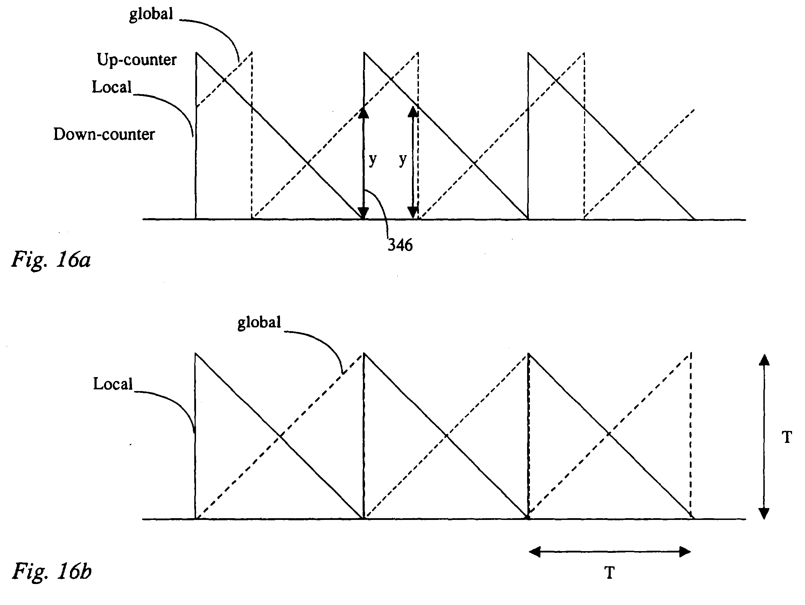

The time coordination process may be implemented using different kinds of counters. The time coordination process using up-counters at the global time counter 164 and at module time counters 174 is illustrated in FIGs. 14a and 14b. The time coordination process using down-counters at the global time counter 164 and the module time counters 174 is illustrated in FIGs. 15a and 15b. The time coordination process using an up-counter at the global time counter 164 and down-counters at module time counters 174 is illustrated in FIGs. 16a and 16b.

FIG. 14a and FIG. 14b illustrate the time counter resetting process at the local time counter circuit 174 in each module 84 in response to packets echoed by the global time counter circuit 164. FIG. 14a shows the case where the local time counter in a circuit 174 is leading the time counter of global circuit 164 and FIG. 14b shows the opposite case.

In FIG. 14a, the output 342 of the global time counter (shown in dotted lines) in circuit 164 and the output 344 of a local time counter (shown in solid lines) in a circuit 174 are shown as a function of time. The output Y is time-shifted by the magnitude of the propagation delay between a given module 84 and the global controller 162. Line 344 represents the local time counter output as if the entire output were transmitted to the global controller 162. A zero phase difference is preferable and in the figure, the outputs 342 and 344 are synchronized but are not aligned. When the output of the local time counter is zero, the module sends a timing packet to the global controller which responds by writing a current value of its global time counter y (346) at the time of receipt of the timing packet and places the timing packet in a response queue. When the timing packet is returned to the module, the module controller 172 resets its local time counter to zero when its output reaches a complement (D - y) where "y" equals the global time stamp inserted in the packet referenced as 348 in FIGs. 14a, 14b., and "D" is the time counter period. If D is a power of 2, then the complement (D - y) is the $1^s$ complement of y.

Similarly, the two counters may be down counters, as illustrated in FIG. 15a and FIG. 15b.

Preferably, the time indicator at the global controller is an up-counter of C bits and the time indicator at each module is a down counter of C bits, the time counters period D being $2^C$ times the clock period. When a module receives a stamped timing packet, it resets its down counter by resetting each of its C bits to "1". This is illustrated in FIG. 16a and FIG. 16b. Perfect alignment results as shown in the pattern illustrated in FIG. 16b.

**Interleaving of Time-Critical and Delay-Tolerant Signals**

As described above, each module 84 has at least one channel, called the control channel, connected to module 84a hosting the global controller 162 as shown in FIG. 6. The egress port connecting the channel is hereafter called the control port of the module. The control channel carries timing packets, other control packets, and payload data. When a timing packet arrives at a type-1 buffer, it must egress at a predefined instant and the transfer of a packet from a type-2 buffer may be in progress at that instant. A circuit 380 shown in FIG. 17 associated with the control port enables egress of the two traffic types while meeting the strict time requirement for transmission of the type-1 data.

Timing packets are type-1 data, while all other data can tolerate some jitter and is classified as type-2 data. At least one buffer 384 stores packets of type-1 data and at least one buffer 382 stores packets of type-2 data. The traffic volume of the type-2 data is likely to be much greater than that of the type-1 data.

Each of the type-1 packets must be transferred in accordance with a strict time schedule. The transfer of type-1 and type-2 data packet streams on a shared channel is enabled by the circuit shown in FIG. 17. The circuit 380 is required at each module for the channel connected to the global controller 162. The circuit 380 includes the payload packet buffer 382, the timing packet buffer 384, a payload packet transfer duration indicator 386, and an output 388 of time counter circuit 174 (FIG. 6). Buffer 382 stores type-2 packets and buffer 384 stores type-1 timing packets. The indicator 386 stores a value representative of the time required to transfer a type-2 packet stored buffer 382, and the indicator 388 stores the output of the local time counter. If the local time counter is an up-counter, the output stored in the time counter output indicator is a $1^s$ complement of the reading of the local time counter. The timing packet must be transmitted when the value stored in indicator 388 is zero. The time remaining before a timing packet has to be transferred is indicated by the counter output stored in indicator 388. When a type-2 packet has been transferred, a buffer selection is determined. If timing packet buffer 384 is empty, any packet stored in type-2 buffer 382 is permitted to egress. Otherwise, if the entry in payload packet indicator 386 is smaller than the entry in time counter output indicator 388, the type-2 packet is transferred since the transfer of the type-2 packet will be complete before the time scheduled for transferring the type-1 packet. If the entry in the payload packet duration indicator 386 is larger than the entry in the timing counter output indicator 388, data transfer is disabled since the stored type-2 packet would not be completely transferred before the requested release time of the type-1 timing packet. When the time counter output indicator 388 reads exactly zero, and a timing packet is stored in buffer 384, the timing packet is transferred. A comparator 392 compares the contents of the payload packet duration indicator 386 and time counter output 388 and produces a two-bit output Q. The output Q is "00" if a reading of the time counter output 388 is smaller than a reading of the payload packet duration indicator 386, "10" if the opposite is true, and "11" whenever the reading of the time counter output 388 is zero. The 2:1 selector connects the outgoing channel to the type-1 packet buffer 384 if Q is "11", or the type-2 packet buffer 382 if Q is "10". Otherwise, the 2:1 selector 390 goes to an idle state. This circuit enables both payload and timing packets to be transferred via a channel used for the transfer of control messages and timing packets.

## Second Embodiment

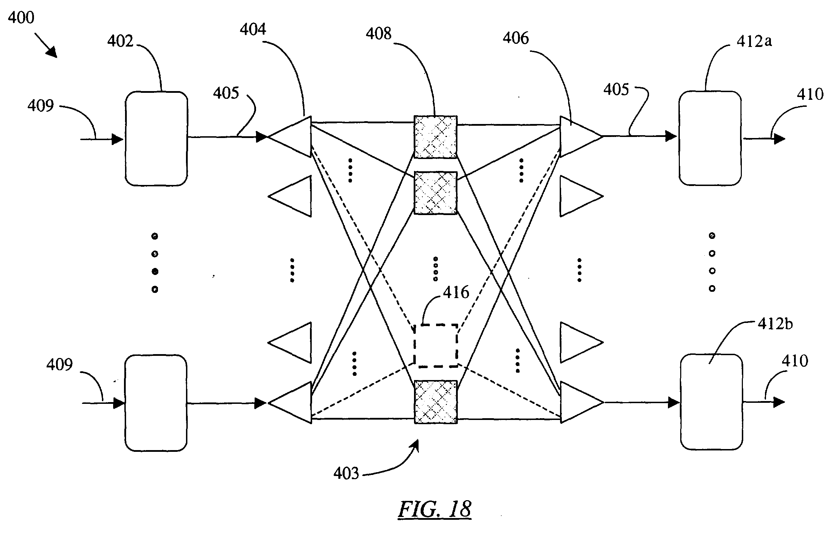

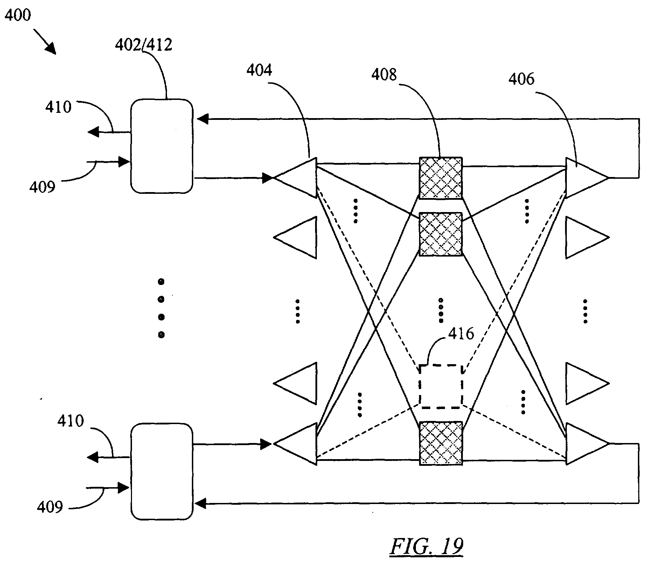

In accordance with a second embodiment of the invention, there is provided a packet switch 400 that includes a plurality of electronic edge modules 402, 412 and an optical core module 403, which are schematically illustrated in FIG. 18. Each electronic edge module switches variable-sized packets. An edge module is commonly a dual module that comprises an ingress edge module 402, for connecting data packet sources 409 to the optical core and an egress edge module 412 for connecting the optical core to data packet sinks 410. The source and sink edge modules are not necessarily symmetrical; they may have different outer capacities. A folded configuration of the packet switch shown in FIG. 18, in which source and sink edge modules 402,412 are paired to share common memories is illustrated in FIG. 19.

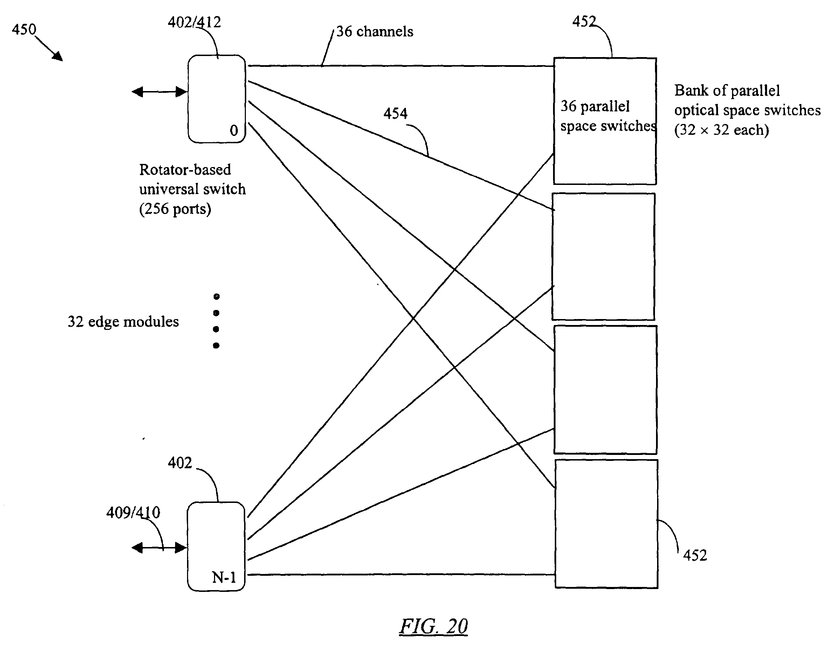

The optical core module 403 may be divided into a number of distributed core modules 452 in a distributed switch, illustrated in FIG. 20. The electronic edge modules 402,412 and the optical core modules 452 may be located in widely separated areas.

### Generic Architecture (Second Embodiment)

The distributed switch 450 includes N > 1 electronic ingress/egress edge modules 402 and a number, C, of core modules 452. Each core module 452 includes a number of space switches. The core modules 452 need not necessarily include the same number of space switches. All the space switches (not shown) have the same number, N1, of input ports and output ports. The total number, L, of space switches in all the modules in the core equals the number of inner channels of each edge module 402.

### Distributed Architecture (Second Embodiment)

In the example shown in FIG. 20, there are 144 parallel space switches (L = 144), each being a 32 × 32 space switch (N1 = 32), yielding a total inner capacity of 4608 ports (144×32). In the example of FIG. 20 there is an expansion factor of 144:412. The expansion is required to facilitate reconfiguration. The 144 space switches are grouped into 4 core modules of identical size, each core module including 36 space switches. Each edge module 402 is connected to each of the M space switches in a core module 452. A reconfiguration of the connections through the core modules 452 is periodically undertaken to respond to fluctuations in traffic volumes.

When reconfiguration of a core module 452 is complete, new connections are established and the edge modules 402 start to transmit data through the new connections and refrain from transmitting data through released connections. Since there is no buffering in the core, the switching of connections at the ingress edge modules 402 must be time-coordinated to coincide with reconfiguration of the core module 452. This requires that control and timing circuitry be provided at the core modules 452. A preferred arrangement for providing the control and timing circuitry is to collocate an edge module 402 with each of the core modules 452 and to use the collocated edge-module's controllers to handle the timing coordination.

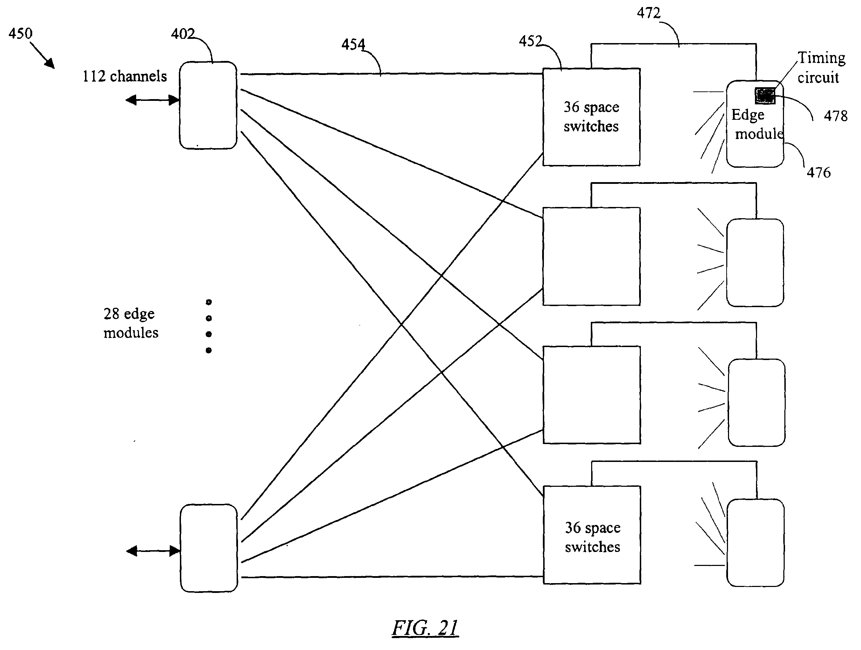

This arrangement is illustrated in FIG. 21 which shows the association of collocated edge modules 476 with core modules 452. As noted above, the core modules may be of unequal size, i.e. the core modules 452 may respectively include a different number of space switches. The space switches in each core module 452 are preferably identical, and each core module includes at least two space switches. The number of space switches in a core module may differ from one core module to another. For example, in a switch having ingress edge modules with 280 inner channels (and the same number of inner channels in each egress edge module), the four core modules may have 80, 64, 96, and 40 space switches, and the edge module's inner channels would be distributed accordingly. Non-uniformity in the sizes of the core modules 452 is one way to accommodate spatial traffic distributions.

## Core Reconfiguration (Second Embodiment)

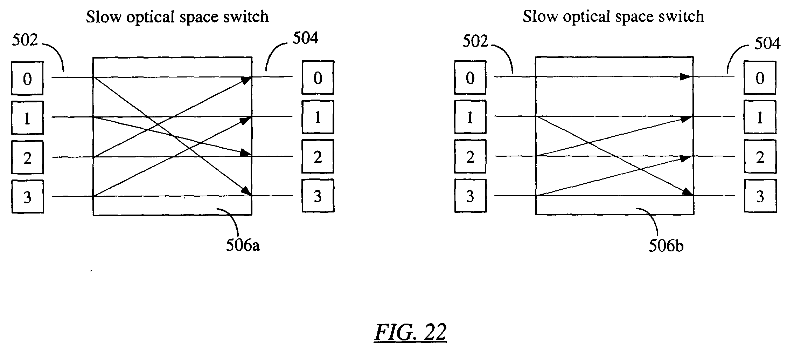

FIG. 22 illustrates a reconfiguration of a single $4 \times 4$ space switch 506, where inputs 502 {0, 1, 2, 3} are reconfigured so that they are connected to outputs 504 {0, 3, 1, 2} instead of outputs {3, 2, 0, 1}. If the switching latency of space switch 506a is high, several milliseconds for example, the reconfiguration may result in a high buffer occupancy at one or more of the ingress edge modules 402 delivering data through the optical core(FIG. 21). This problem can be avoided by configuring a parallel, idle space switch 506b with the desired connection pattern and then switching to the idle space switch 506b by redirecting data packet traffic from the edge modules 402 to the reconfigured connections on space switch 506b. The released space switch 506a thereafter becomes an idle space switch ready for a next reconfiguration. This approach forms the basis of the reconfiguration method according to an embodiment. However, it is emphasized that the use of an idle space switch 506a, b for each active space switch 506a, b that is to be reconfigured is not economically viable since it results in a 50% core-capacity waste. Instead, a spare space switch 506b may be used to facilitate the reconfiguration of several other space switches 506a, one at a time. A method of reconfiguring a multi-switch core using a small number of idle core switches is described below.

An ingress edge 402 module may have two or more connections to an egress edge module 412. The connections between the ingress edge module 402 and the egress edge module 412 are preferably routed through different space switches 403 of the same core module 452, so that each route has the same propagation delay. When an ingress edge module controller determines that a reduction in the number of connections between itself and the egress edge module is appropriate because of a decrease in data traffic, it can release any of the connections. The selection of the connection to be released is crucial to the entire reconfiguration process, as will be described below in some detail.

The high-capacity switch 400 shown in FIGS. 1 and 2 employs a large number of parallel space switches in the core. A few of the space switches may be used as idle switches for facilitating switching at the required rate to avoid excessive buffering and packet delay in the ingress edge modules 402. However, with parallel space switches, the connections to be released may be threaded through different space switches, and their release might not yield a spare space switch. The invention therefore provides a method for organizing the reconfiguration process by selecting the space switch from which a connection is released so that idle connections are consolidated in a small number of space switches. The benefit of idle connection consolidation will become apparent from the description that follows.

## Reconfiguration in Different Space Switches (Second Embodiment)

When an ingress edge module 402 requests the replacement of a connection to an egress edge module 412a for a connection to an egress edge module 412b (FIG. 18), releasing the first connection and establishing the second connection subsequently can only be done if the switching delay in the core is negligible. If the switching delay in the core is high, the second connection must be configured before the connection change is performed. It is therefore necessary to establish a connection from the ingress edge module 402 to the new egress edge module 412b while preserving the connection from the ingress edge module 402 to the egress edge module 412a. After the connection with the egress edge module 412b is established, the ingress edge module 402 can reconfigure to use the connection to the egress edge module 412b, and cease use of the connection to egress edge module 412a.

## Consolidation of Idle Connections (Second Embodiment)

Regardless of the utilization of the outer channels of the packet switch 400, each of the edge modules 402,412 has at least D idle channels to each core module. D is preferably a small integer. With D = 1, a core module having sixteen 8 × 8 space switches for example (M = 16, N = 8), would have 8 idle connections. If the 8 idle connections are threaded through 8 different space switches, the probability of successful assignment of a new reconfiguration request would be very low. If, on the other hand, the 8 idle connections are in one (vacant) space switch, then any permutation of the possible reconfiguration pattern can be accommodated. If k connections are released from a space switch, the number of new connections that can be accommodated in the same space switch is k × (k-1) . If k = 1, the space switch can not accept a new connection except for the connection that was just released, which is of no current interest. If k = 2, two new connections can be added, if k = 8, the number of possible new configurations is 56 and any 8 out of 56 possible new connections can be established.

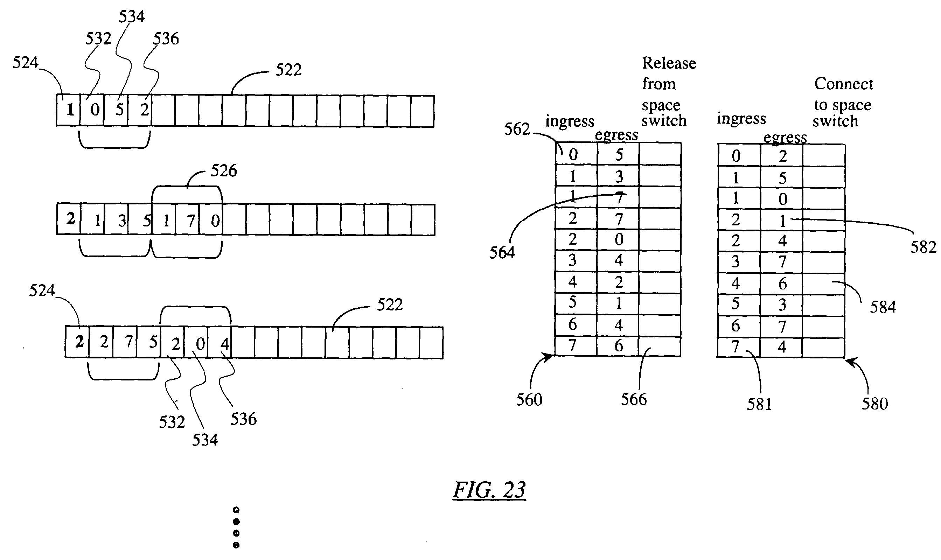

To begin a reconfiguration process, reconfiguration requests received from the ingress edge modules 402 are sorted into a release array 560 (FIG. 23) and a connection array 580. Each entry in array 560 has three fields 562, 564, and 566 that respectively store identifiers of an ingress edge module, an egress edge module, and a release space switch. Each entry in array 580 has three fields 581, 582, and 584 the respectively store identifiers of a ingress edge module, a egress edge module, and a space switch to be used for a new connection. The release space switch 566 and the connection space switch 584 result from a procedure described below.

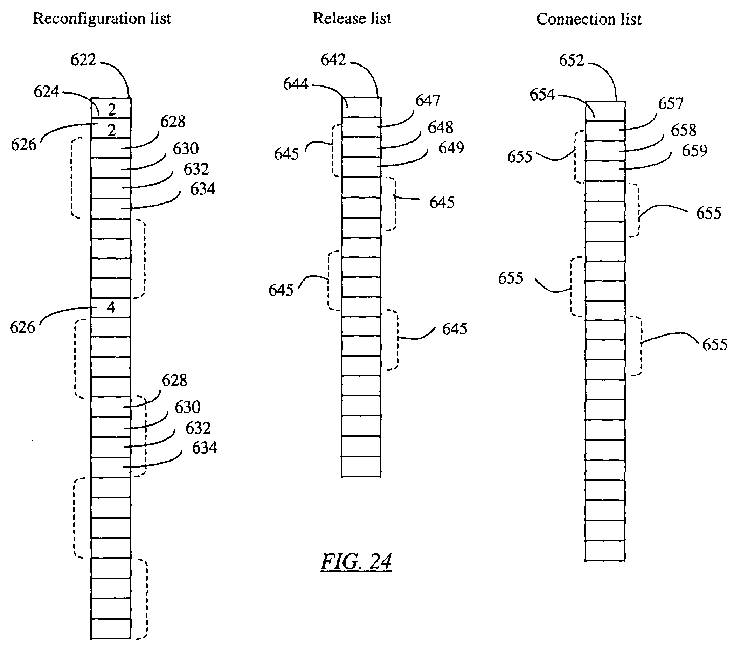

Arrays 560, 580 are used to organize the releases and the new connections in such a way as to increase the vacancy discrepancy among the core space switches 403 (FIG. 18). This is accomplished by a most advantageous selection of the release switches. As described above, vacancy consolidation increases the opportunity of establishing new connections. A release list 642 and a connection list 652 (FIG. 24) result from a reconfiguration process. The release list 642 contains a first entry 644 indicating the number of releases. The first entry 644 is followed by a number of segments 645 equal to the number of releases. Each segment 645 includes three fields: an identifier 647 of an ingress edge module, an identifier 648 of an egress edge module, and an identifier 649 of the space switch from which the connection is to be released.

A connection array 652 has a first entry 654 indicating a sum of the number of connection requests, and a number of unsuccessful connection attempts accumulated from previous reconfiguration cycles. Following the first entry 654 are a plurality of segments 655 as indicated in entry 654. Each segment 655 includes an identifier 657 of an ingress edge module, an identifier 968 of an egress edge module, and an identifier 659 indicating the space switch that will accommodate the new connection, determined using a process that will be described below. The construction of arrays 642 and 652 is the outcome of the reconfiguration computation.

## Conventional Connection Packing: Single Releases vs. Batch Releases (Second Embodiment)

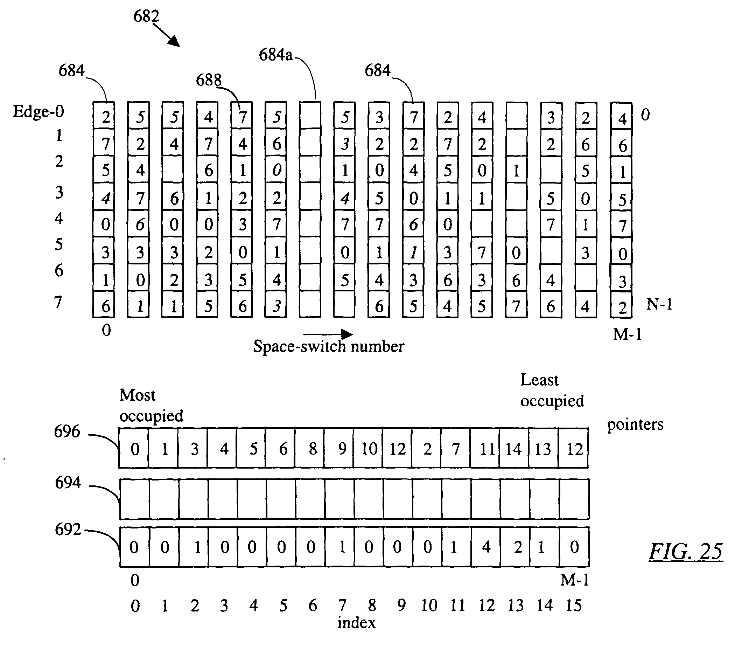

In the conventional packing process used to reduce call blocking in circuit-switched networks, a switching node scans all the paths between an input port and an output port until a free path is located. The scanning process always starts with a designated reference path and proceeds to examine the subsequent paths in a given order. The release and connection processes are separate events. In accordance with the present invention, the release and connection processes are conducted in batches in order to maximize the opportunity of successful reconfiguration. Batch processing affords the opportunity of advantageous trade-off of free channels when a connection can choose from two or more available routes. Furthermore, in one embodiment, both the releases and connections are implemented in an iterative way that selects the space switch 403 to be reconfigured by comparing a space switch connectivity array (to be explained below with reference to FIG. 25) with the reconfiguration requests received from the ingress edge modules 402. The process therefore selects the connections to be released, whereas in ordinary circuit-switching operations, the connection to be released is determined by a network user, not the switch controller.

## Reconfiguration Methods (Second Embodiment)

With reference once more to FIG. 6, each ingress edge module 402 communicates a reconfiguration request array 522 to a selected core module 452. The reconfiguration request array 522 lists connection changes required to accommodate fluctuations in data traffic. The first entry 524 contains the number of connection changes requested. Each connection change is specified in subsequent segments 526. Each segment 526 includes three fields: the identifier 532 of the requesting edge module; the identifier 534 of the current egress edge module to which the ingress edge module is connected; and, the identifier 536 of the egress edge module to which the ingress edge module requires a connection. The reconfiguration request lists 522 received by each core module controller 476 (FIG. 21) are aggregated in a release list 560, and a connection list 580.

A first method of core reconfiguration uses a fixed-pattern packing process, while a second method uses an adaptive-pattern packing process. Both the first and second methods use batch packing. Two variations of each process are described, one for a fast switching core, and one for a slow switching core.

## Fixed-pattern Packing (Second Embodiment)

In each core module 452, connections are assigned starting from a reference space switch and proceeding in a predetermined order to the other space switches. Connection releases proceed in exactly the opposite order. Without loss of generality, the space switches of a core module 452 may be labeled as 0 to M-1. Connection assignment can start from space-switch 0 and proceed in a sequential order to space switches 1, 2,.., to M-1 where the cycle automatically repeats. The release process starts from space switch M-1 and proceeds in sequential order to M-2, M-3,.. to space switch 0, where the release cycle automatically repeats.

### (1) Fast Core Switching

If the switching delay in the core modules is negligible, the release list 642 (FIG. 24) is executed first followed by the connection list 652. When the release list 642 is executed first, each released connection is assigned a state of "10", indicating a connection just released. When the connection list 652 is executed, the new connections are assigned a state of "01", indicating a connection just established.

### (2) Slow Core Switching

If the switching delay in the core modules is high, the connection list 652 is executed first, followed by the execution of the release list 642. The connection-then-release order is required to avoid the need for a respective source edge module to interrupt data transfer during a reconfiguration procedure. A new connection in response to a reconfiguration request must use an optical space switch other than the optical space switch supporting a respective connection to be released.

### Adaptive-pattern Packing (Second Embodiment)

FIG. 25 shows a data structure 682 for tracking the connectivity of the M space switches 403 in a core module 452 to determine the reconfiguration of the core module. In a core module 452 comprising M space switches 403, the space switches are preferably labeled as 0 to M-1. An array 684 of N entries is associated with each space switch, N being the number of ingress edge modules 402. The array 684 indicates the connectivity of a respective space switch 403. For example, in space switch 0, ingress module 0 is connected to egress module 2, ingress module 1 is connected to egress module 7, and so on. Array 684a is associated with a completely-vacant space switch in this example.

Each entry 688 in the connectivity array 684 has two fields. The first field in each entry in the array 684 is the output port number to which the corresponding input port in a respective space switch is connected. A null entry in the first field indicates that input port j is idle. The second field is two bits wide (not illustrated) and is used to indicate the state of a connection specified by the value of the first field. The two bits permit the storage of three state indicators, "00", "01" and "10".

The state indicators may be used to facilitate connection re-packing by enabling connection status to be recorded and recognized. A state of "00" indicates an idle connection; a state of "01", indicates a connection just established; and, a state of "10", indicates a connection just released. The re-packing process is not used in this disclosure.

The number (count) of uncommitted connections in each space switch is recorded in array 692. Array 694 is used as a work array that is accumulated into a pointer for facilitating the selection of a sequential order for reconfiguring the space switches. Array 696 stores the space switch identifiers, sorted in an ascending order according to the vacancy of the respective space switches. The vacancy of a space switch is represented by the number of its idle output ports or, equivalently, the number of uncommitted connections. In the case of multicast, the number of active output ports exceeds the number of active input ports.

A connection reconfiguration may be viewed as a release of a connection, followed by a request for a new connection to a different egress edge module 412. Array 560 (FIG. 23) shows a set of released connections and array 580 shows a set of requested new connections.

### The Release Process (Second Embodiment)

In order to select a space switch from which a connection is to be released, a release array 560 (FIG. 6) indicating the connections selected for release is matched with each of the M connectivity arrays 684. The number of resulting idle connections is determined. The space switch 403 that will have the highest vacancy after release of a respective subset of connections is selected. The connectivity array 684 of the selected space switch is removed from the list of connections to be released and the connection subset to be released is copied to the reconfiguration list 622 (FIG. 7). The process is repeated with the remainder of the release array 560 until all the releases are assigned to space switches 403. Reconfiguration list 622 (FIG. 7) is used to store all the release allocations.

### The Connection Process (Second Embodiment)

Array 692 (FIG. 25) stores the number of idle connections in each of the M space switches 403. Array 694 (FIG. 8) stores the vacancy of each space switch. Each space switch having a vacancy exceeding one is a candidate for receiving a connection. The assignment of connections to space switches 403 starts by attempting space switches with 2 idle connections, followed by space switches with higher vacancies in an ascending order. After all the connections are assigned to space switches, or when no further connections can be assigned, the connection assignment process is terminated. The lists of connection releases 642 (FIG. 7) and connection assignments 652 are merged in the reconfiguration list 622 (FIG. 7). Some entries in reconfiguration list 622 will only include releases. This occurs when an associated connection of a reconfiguration request can not be made. Other entries in the reconfiguration list 622 will only include connections, if the associated releases were implemented in a previous cycle.

As mentioned earlier, at least one connection from each ingress edge module 402 to each core module 452 should be kept as an idle connection that cannot be used for a committed connection. This is required to facilitate the reconfiguration process without having to rearrange a large number of connections, which can be time consuming. After each possible committed connection has been assigned, unassigned channels from ingress edge modules 402 and unassigned channels to egress edge modules 412 can be paired to form temporary connections (uncommitted connections) used for the transfer of connectionless traffic. It should be noted that during normal network operation, a significant proportion of connections may be idle. This significantly facilitates the reconfiguration process.

### Effect of Switching Time (Second Embodiment)

If switching time in the core modules is negligible, releases can be effected prior to new connections. Otherwise, new connections are considered first as will be explained below.

### Fast Core Switching (Second Embodiment)

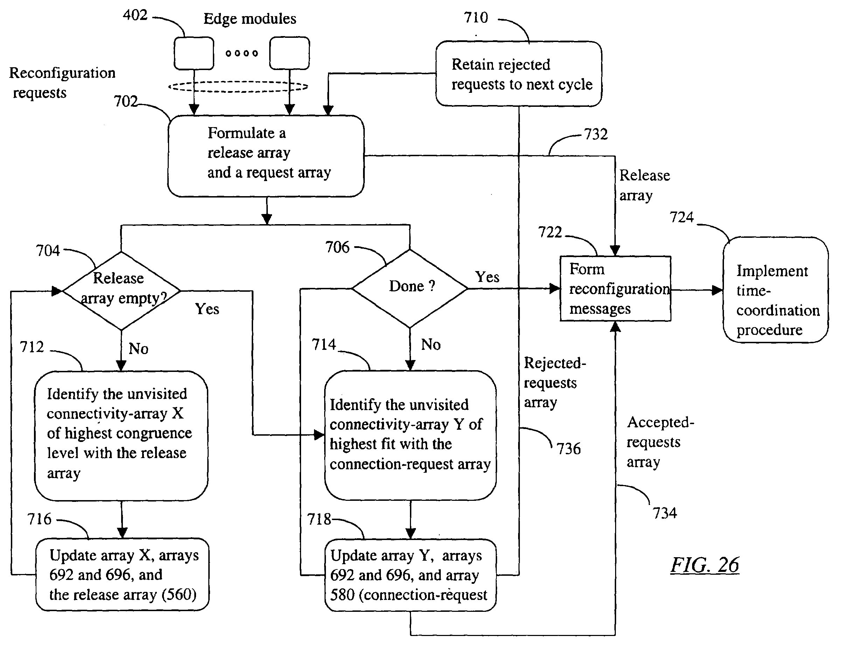

A connection assignment process for a distributed switch 450 (FIG. 20) having a core modules 452 comprising parallel space switches with a negligible switching delay is described with reference to FIG. 26. A release array 560 and connection array 580 are formulated in step 702, using reconfiguration arrays 524 (FIG. 23) sent from the ingress edge modules 402. In step 704, the release array 560 is examined to determine if it is empty. If not, (step 712) a congruence level of the release array 560 and the connectivity array 684 (FIG. 25) of each space switch is determined and the connectivity array 684 with the highest congruence level is selected. In step 716, the congruent entries are deleted from the release array 560 and marked as vacant in the selected connectivity array 684. The process of steps 712 and 716 are repeated, excluding connectivity arrays 684 that have already been considered, and in each iteration looking for the space switch 403 having the connectivity array 684 with the highest congruence level with the remainder of the release array 560 (FIG. 6). When all the releases have been effected, step 704 directs the process to step 714 where an attempt to accommodate the connection requests is made.

In the connection process, space switches 403 having a vacancy of at least two idle connections are sorted in an ascending order of vacancy, starting with space switches 403 having at least 2 idle connections and proceeding to space switches with more than two idle connections. The space switches are then examined in ascending order of vacancy to determine what new connections listed in the connection array 580 (FIG. 23) can be assigned.

When the space switches of a vacancy of 2 are considered, the space switches that can accommodate two connections from the connection array 580 are selected first, followed by the space switches that can accommodate only one connection from the connection array 580.

This process proceeds by considering switches having a vacancy of 3 idle connections. An attempt is made to accommodate the remaining connections by first selecting space switches 403, of core module 452 undergoing a reconfiguration, that can accommodate three connections from the connection array 580. This is followed by considering space switches 403 that can accommodate two connections from the connection array 580. Thereafter, space switches are considered that can accommodate only one connection from the connection array 580.

Space switches with higher vacancies, if any, are used in the same fashion. The process continues in this manner by iterating steps 714 and 718 until no further progress can be made, as determined in step 706, because the connection array 580 is empty, or none of the connections remaining in the connection array 580 can be accommodated in the current connection scheduling cycle. If some of the connections in the connection array 580 cannot be accommodated, the remainder of the connection array 580 containing the unsuccessful connections is retained for processing during a subsequent connection assignment cycle.

The release list 642 (FIG. 24) is generated by the release process in steps 704, 712, and 716 and the connection list 652 (FIG. 7) is generated by the connection process in steps 706, 714, and 718. The release list 642 and connection list 652 are processed in step 722 in which reconfiguration messages are formulated to initiate the reconfiguration process.

### Slow Core Switching (Second Embodiment)

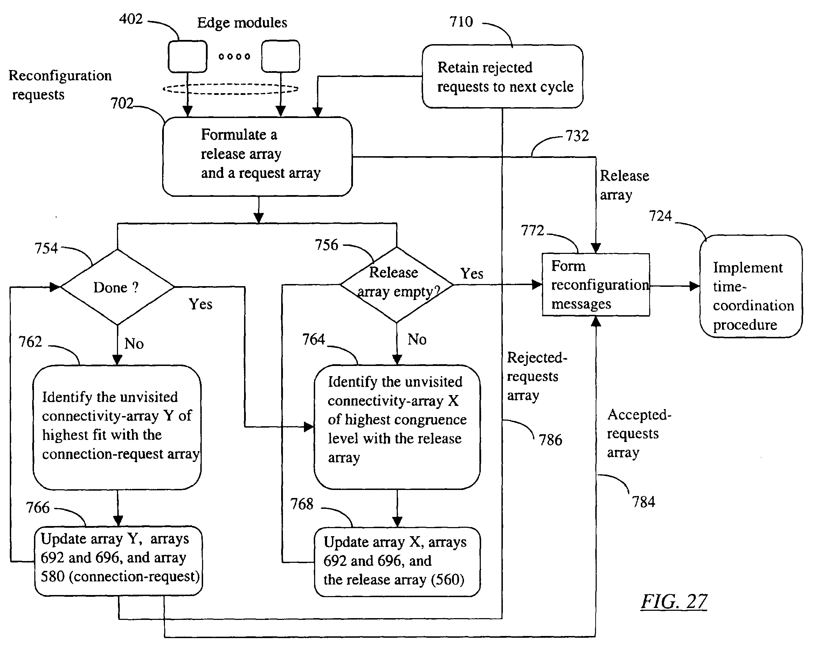

FIG. 27 is a flow chart of a process used for connection release and assignment preparatory to core reconfiguration in a distributed switch 450 having core modules 452 with space switches 403 having a high switching latency. The release array 560 and connection array 580 are formulated in step 702 as described above with respect to FIG. 26. The establishment of new connections is executed first. Space switches 403 having a vacancy of at least two idle connections, as indicated by connectivity arrays 684 (FIG. 25), are sorted in an ascending order of vacancy.

The space switches with a vacancy of 2, having 2 idle connections, are considered first. Space switches that can accommodate two connections are selected first, followed by space switches that can accommodate only one connection.

The process then proceeds by considering connectivity arrays 684 for space switches having a vacancy of 3 idle connections. An attempt is first made to assign the remaining connections by selecting space switches that can accommodate three connections each. Space switches that can accommodate two connections each are considered second. Finally, space switches that can accommodate only one connection are considered. Space switches with higher vacancies, if any, are used in the same fashion. Thus, space switches of the same vacancy are differentiated according to the number of connection-requests that can be accommodated.

The process continues by iterating steps 762 and 766 until no further progress can be made, as determined in step 754. Further progress cannot be made when either the connection array is empty or none of the remaining in the connection array can be accommodated in the current scheduling cycle. In the latter case, the remainder of the connection array containing the connections that could not be assigned is retained for processing during a subsequent scheduling cycle.

The release process is then executed in such a way as to attempt to maximize an occupancy variance between the space switches in the core module 452. In step 764, the congruence level of the release array 560 and the connectivity array 684 of each space switch is determined and the connectivity array 684 with the highest congruence level is selected to begin the release process. In step 768, the congruent entries are deleted from the release array 560 and marked as idle in the selected connectivity array 684. The process of steps 764 and 768 are repeated, excluding connectivity arrays 684 for space switches that have already been considered for releases, and during each iteration determining a connectivity space switch with the highest congruence level with the remainder of the release array 560. When all the releases are effected, step 756 directs the process to step 772.

The release list 642 is generated in steps 764 and 768 by the release process, and the connection list 652 is generated in steps 754 and 766 by the connection process. The two lists are processed in step 772, where reconfiguration messages are formulated to initiate the reconfiguration process at the edge modules.

## Unprotected Traffic (Second Embodiment)

All connections are provisioned in units of a channel capacity. A channel capacity is typically of an order of 10 Gb/s. Data traffic without a guaranteed quality of service (unprotected traffic) can be transferred using excess capacity, if any, of committed connections. The transfer of unprotected traffic using excess capacity of committed connections is controlled exclusively by the edge modules.

## Idle-connection Assignment Policy (Second Embodiment)

Under any traffic condition, each edge module has at least one idle channel connected to one of the space switches 403 in each core module. The total number, J, of idle channels emanating from an ingress edge module is at least equal to a number, C, of core modules 452 (FIG. 20). Similarly, a number, K, of idle channels terminating on an egress edge module is at least equal to the number C of core modules. The number J may be larger than the number K if channel multicast is supported.

A connection is made up of two channels, a first channel from an ingress edge module 402 to a designated core space switch 403, and a second channel from the designated core space switch 403 to an egress edge module 412. Idle channels from ingress edge modules 402 to a particular core module 452 and idle channels from the core module 452 to egress edge modules 412 can be paired to form uncommitted connections. As defined above, an uncommitted connection carries 'best-effort' traffic that is not given any quality-of-service guarantees. Thus, an uncommitted connection can be released if either of its channels is required to form a committed connection. The release process, however, must ensure that no data is lost. The reconfiguration procedure described above only establishes committed connections and treats the channels forming uncommitted connections as if they were idle channels. Once the reconfiguration of committed connections is completed, new idle channels are formed and some uncommitted connections may be terminated. Resulting idle channels may be paired again to form new uncommitted connections. The reconfiguration process at the ingress edge module is indifferent respecting the type of connection being established.

The ability to define the uncommitted connections depends largely on the spatial distribution of the idle channels. In one extreme, if all the channels to and from one of the space switch are idle, a permutation of connections from any ingress edge module 402 to any egress edge module 412 can be made. In the other extreme, if the idle channels are distributed uniformly among M space switches, with M ≥ N, so that there are at least N space switches each having one free ingress channel and one free egress channel, then only N specific uncommitted connections can be made. The reconfiguration procedure therefore attempts to broaden the variance in occupancy between the space switches 403 within each core module 452. Thus, when the reconfiguration is complete, a small number of space switches likely support most of the idle channels. This increases the probability of successfully establishing connections requested by the ingress edge modules.

## Treatment of Unprotected Traffic (Second Embodiment)

Each ingress edge module 402 may have several ingress ports (not shown), preferably of an order of 128. At each ingress port of an ingress edge module 402, the traffic is sorted into traffic streams (not shown), each of which corresponds to an egress edge module 412. Each traffic stream is assigned to a traffic stream queue. The traffic stream queues normally share a common memory. The management of the traffic stream queues includes packet-level scheduling and is governed by rules that are internal to each ingress edge module 402 and may differ from one ingress edge module to another. The ingress queues in each ingress edge module 402 may be split into two main categories. The first relates to rate-controlled protected traffic and the second relates to unprotected traffic with no quality of service guarantees. Within each category, the traffic may be further separated into narrower classifications. Those classifications are not necessarily visible outside the ingress edge module. A traffic stream is defined only by an ingress/egress module pair. The composition of a traffic stream is determined by its ingress edge module. At least one output port of each ingress edge module carries only unprotected traffic and the access privilege to that port or ports is governed by rules internal to the ingress edge module. The controller of each ingress edge module determines the required capacity, expressed in units of channels, for each of its traffic streams and reports the required capacity to a respective core module. As explained above, the channels of each ingress edge module are divided among the core modules.

As noted above, an ingress edge module 402 has at least one channel to each of the core modules that can be assigned to carry unprotected traffic. The core reconfiguration procedure treats channels carrying unprotected traffic as if they were completely idle. When committed connections for protected traffic are assigned, the remaining idle channels in the core are paired to form new uncommitted connections that may differ from previously configured ones. If there are two or more idle input channels to a core module 452, the core module controller 476 (FIG. 21) attempts to maximize the number of uncommitted connections that match the requests received from the ingress edge modules 402. If there is only one idle input channel, then only one uncommitted connection can be made. With multiple core modules, a protocol is required for maximizing the utilization of the uncommitted connections. A preferred simple protocol requires each ingress edge module to broadcast its requirement for uncommitted connections to all core modules. Each core module grants an appropriate connection to a respective ingress edge module with a round-robin fairness.

## Allocation of Uncommitted Connections (Second Embodiment)

As described above, a part of the unprotected traffic may use excess capacity of committed connections. To serve any remaining unprotected traffic, each ingress edge module 402 generates a list of preferred uncommitted connections based on the spatial distribution of the remaining unprotected traffic. The preferred core module 452 for each entry in the list is determined using a preferred routing list identical to one used for the committed connections. If an ingress edge module 402 has a single idle channel to a given core module 452, the core module 452 can only support one uncommitted connection for that ingress edge module 402. Nonetheless, the ingress edge module 402 may identify several candidate uncommitted connections for each core module 452 and communicate the identities of such connections to a respective core module 452. Preferably, a rank indicative of the volume, or any other property, of the respective unprotected traffic should also be communicated to a respective core module. Each core module may then select the candidate uncommitted connections using the data it receives from all subtending ingress edge modules 402. The selection takes into account the rank of each candidate. The selection is then communicated by each core module 452 to the ingress edge modules 402. The reconfiguration process at the ingress edge modules combines both the committed and uncommitted connections. However, the committed and uncommitted connections are identified so that traffic with a guaranteed quality of service is not sent over an uncommitted connection.

## Edge Reconfiguration (Second Embodiment)

FIG. 11 illustrates a preferred architecture for an edge module switch 402, 412 in accordance with the invention. The switch is preferably an electronic rotator switch as described in Applicant's co-pending European Patent Application entitled RATE-CONTROLLED MULTI-CLASS HIGH-CAPACITY PACKET SWITCH which was filed on January 31, 2000 and assigned Serial No. 00300700.2, the specification of which is incorporated herein by reference. The edge module switch includes a plurality of ingress ports 1158 connected to an input rotator 1502, and an output rotator 1504 connected to a plurality of egress ports 4160. The ingress ports 1158 are connected to subtending data packet sources (not shown) and the egress ports 4160 are connected to subtending data packet sinks (not shown). The input rotator 1502 and the output rotator 1504 are respectively connected to a plurality of parallel middle memories 1520 by inner links 4162 and 4164 in a manner explained in detail in Applicant's copending patent application. Both ingress ports 1158 and egress ports 4160 have packet queues (not shown).

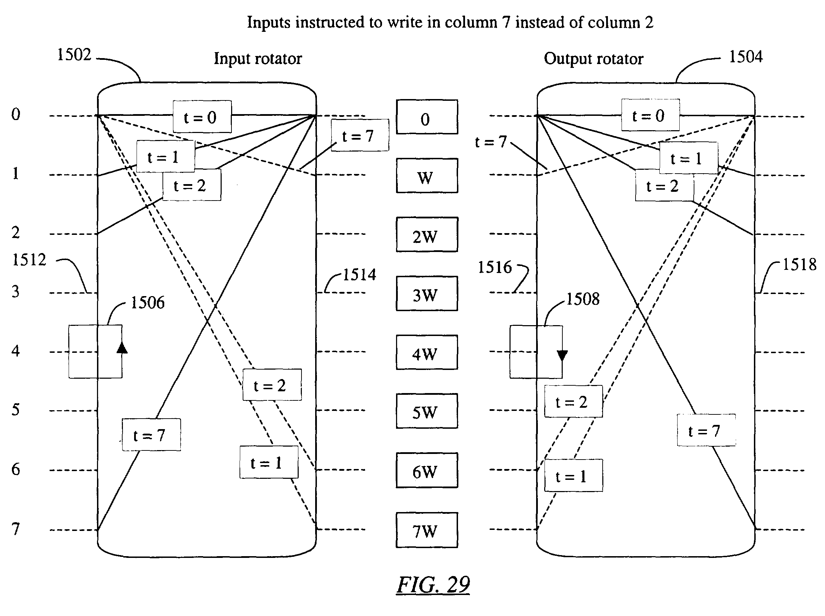

FIG. 29 illustrates the relative timing of input rotator 1502 and output rotator 1504 in an 8 × 8 port high-capacity packet switch 402,412. The arrows 1506 and 1508 indicate a direction of rotation of the respective rotators. An input port 1512 of input rotator 1502 connects to a correspondingly numbered output port 1514 of the same rotator at cyclic time t = 0. The cyclic time period equals the number of input ports of the rotator times a memory access duration "d". The memory access duration is a time period during which an input port 1512 of input rotator 1502 writes data units to a middle memory 1520. An input port 1516 also connects to an output port 1518 of an output rotator 1504 during the memory access time of duration "d".

FIG. 29 also illustrates the connectivity of input port "0", indicated by reference number 1512, to the respective output ports 1514 (0, ... 7) during a rotator cycle. Given the counter-clockwise rotation indicated by arrow 1506, input "0" of rotator 1502 is connected respectively to output ports "0", "7", "6", "5", "4", "3", "2", and "1" during access intervals 0 to 7. Arrow 1508 indicates the clockwise rotation of the output rotator 1504. Likewise, for the output rotator 1504, the input port "0" (reference 1516) is connected respectively to output ports "0", "1", ......, "7", during access intervals 0 to 7.

Each output port 1514 of input rotator 1502 writes data units (the amount of data transferred during an access interval) to a middle memory 1520 during each access interval. Each access interval is split into roughly equal write and read periods. Each input port 1516 of output rotator 1504 subsequently reads the data units from the middle memories 1520 during the rotator cycle. During each access interval, the read address for the middle memories 1520 is advanced by a predetermined data unit width "W". The value of "W" is a design parameter determined by the amount of data to be written to, and read from, a middle memory 1520 during an access interval "d". The values indicated by reference numeral 1522 represent the read addresses of respective middle memories 1520 at the beginning of a rotator cycle (t = 0). The write addresses of the middle memories 1520 are determined by the input ports 1512 of the input rotator 1502. This timing pattern is used to determine middle memory access restrictions during a rotator cycle prior to a reconfiguration of the ingress edge module 402, as will be explained in more detail with reference to FIG. 19.

The time at which an ingress edge module 402 must reconfigure to conform with changes in connectivity in the core is dictated by a controller 476 of an associated core module 452 (FIG. 21). The reconfiguration period is likely to be significantly longer than the rotator cycle. An edge module must, however, implement its reconfiguration at a boundary of an access interval. The access interval is typically of an order of a fraction of a microsecond.

When an input port 1512 writes a data unit to the middle memories 1520, the data unit is not read from the middle memories 1520 for a period of time ranging from half an access interval to almost a full rotator cycle. Consequently, under a "steady state" condition between core reconfigurations, in which the input to output connectivity of an ingress edge module 402 remains unchanged, data units are read from the middle memories 1520 by the input ports 1516 of the output rotator up to nearly a full rotator cycle after they are written. When a reconfiguration of the ingress edge module must be performed to conform to changes in the core, however, it is imperative that data units not be written to a middle memory if they cannot be read from the middle memory by the intended output before reconfiguration. Otherwise, the data units in the middle memories may be sent to the wrong input port 1516 of the output rotator 1504. The latency between the writing of a data unit to the middle memories 1520 and the reading of the data unit from the middle memories, is dependent on a spatial relationship between the output port 1514 of the input rotator 1502 and the input port 1516 of the output rotator 1504. Consequently, an output port 1514 can only write a data unit to the middle memories if enough time remains before reconfiguration for the data unit to be read by the intended output port 1518. This timing issue is explained below in more detail.

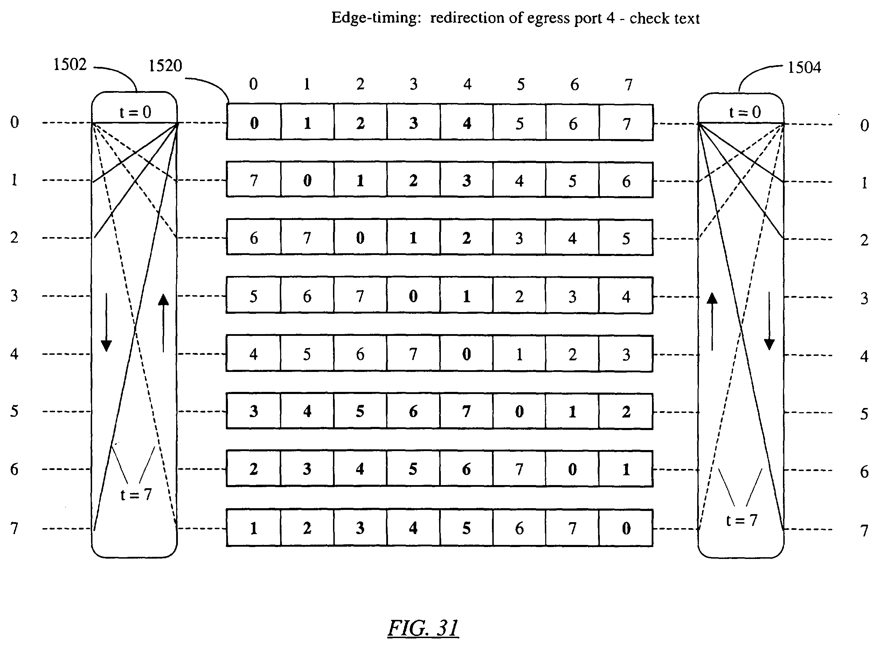

FIG. 31 illustrates the process of reconfiguration in a rotator-based switch. The column 1532 represents data written by an output port 1514 of the input rotator 1502. The data written to column 1532 is destined for the output port "2" (reference 1518) of the output rotator 1504. Output port "2" only transfers data read from column 2 of each middle memory 1520. A reconfiguration command received from a core module 452 (FIG. 21) directs the ingress edge module 402 to switch output from port "2" to port "7". The input rotator responds to the command by changing the write address from 2 to 7 for the input port currently writing to column 2. This is a simple control operation in a rotator-based switch.

FIG. 31 illustrates a limitation imposed on each input port 1512 that is writing to an output port 1518 during a changeover phase immediately prior to reconfiguration. The numbers shown in arrays 1520, represent cyclical time slots (the cycle being 8 for an 8×8 switch) at which an input port 1512 or an output port 1518 is accessing the respective memory to respectively write and read. If an output port 1518 (X) is to change connectivity during a core reconfiguration, the incumbent input port 1512 (j) can only write to the output port (X) during cyclical time slots 0 to $[N' - 1 + j - X]$ *module N',* N' being the number of ports of either rotator.

For example, if input port 7 (j = 7) is connected to output port 4 (X = 4), then during a changeover cycle, input port 7 can only write to output port 4 during time slots 0 to [8 - 1 + 7 - 4], i.e., 0 to [10], i.e., 0 to 2. To illustrate this, by comparing the contents of column 7 and column 4, it is apparent that each entry in column 7 (when the input port 7 writes) is respectively less than a corresponding entry in column 4 (when the output port 4 reads) only at time slots 0, 1, and 2. Writing must precede reading during the changeover cycle, otherwise, the data written may be overwritten by the new input port connected to output port X by the reconfiguration process.

### Reconfiguration (Second Embodiment)

Reconfiguration of the core modules 452 is governed by the ingress edge modules 402, which request changes in connectivity based on dynamic traffic pattern changes. The ingress edge modules 402 constantly monitor traffic stream buffers and request new connections when traffic volumes warrant. Likewise, unused links are released to permit other ingress edge modules 402 to use the core resources, if required. As explained above, each ingress edge module refers to a preferred routing list that indicates the particular core module 452 to which a request for changes in connectivity and connection releases are sent. Requests may be sent from the ingress edge modules at any time, although the core modules 452 can only reconfigure in accordance with a predetermined schedule.

Although the requests for connection releases and changes in connectivity are generated by the ingress edge modules 402 and the core modules 452 reconfigure only in response to those requests, the core controller determines autonomously what reconfiguration occurs based on one of the algorithms described above. After the core module 452 has determined the reconfigured connectivity of core switches it controls, reconfiguration messages are sent to each of the respective ingress edge module controllers informing the controller of a time when reconfiguration of the core will occur.

In order to ensure successful transition through a reconfiguration, it is critical that all ingress edge modules 402 pause for a relatively-short period (a fraction of a microsecond should suffice) at the time of reconfiguration of a core module 452. The pause period is determined by a timing-discrepancy allowance (a fraction of a microsecond) and source-edge-module reconfiguration delay (for example, a 400 nanoseconds). If core-switching-latency masking is not applied, the core switching delay must also be added to the pause period (guard time). Due to propagation delays, relative times must be used to govern reconfiguration coordination. Consequently, each edge module controller has a timing circuit that includes time counters synchronized to the relative times of each core module controller. In the distributed switch 450 shown in FIG. 21, each edge module controller includes four time counters, one for each core module 452. A timing packet is periodically sent from each core module controller 476 to ensure that the time counters in the edge module controllers are synchronized.

The agile optical-core distributed packet switch in accordance with the invention provides a self-governing switch that dynamically adapts to changes in traffic loads. Control is exercised from edge modules that determine how core connectivity is to be arranged by requesting changes to the connectivity in the core. Core modules operate autonomously to effect the requested changes in a manner that maximizes reconfiguration flexibility while ensuring that as many requests are honored as possible.

It will be understood by those skilled in the art that the foregoing description is intended to be exemplary only. Changes and modifications to the preferred embodiments of the invention will no doubt become apparent to persons skilled in the art. The scope of the invention is therefore intended to be limited solely by the scope of the appended claims.

### Claims

1. An agile switch that includes a channel-switched core and a plurality of data switch modules connected to local data traffic sources through incoming links and to local data traffic sinks through outgoing links, and connected to the channel-switched core by a plurality of inner channels, each data switch module having a local controller and a local time counter circuit, means for sorting data units into data groups corresponding to the respective channels, a memory for storing the sorted data groups, means for determining a volume of data in each data group, means for reporting each volume of data to a core controller **CHARACTERIZED** by:

   the core controller dynamically configures the channel connections among data switch module pairs to adapt to spatial and temporal variations in data traffic loads.

2. An agile data switch as claimed in claim 1 wherein the channel-switched core is a memoryless channel-switched core and the core controller includes a global time counter circuit and a channel assignment mechanism, the channel assignment mechanism computing a predetermined time schedule for the memoryless channel-switched core.

3. The agile data switch as claimed in claim 2 wherein the links connecting each module to the channel-switched core are wavelength multiplexed and the channel-switched core comprises a bank of optical demultiplexers, a bank of space switches, and a bank of optical multiplexers.

4. The agile data switch as claimed in claim 1 wherein the channel-switched core is an optical switch, comprising:

an integer G > 1 groups of incoming wavelength multiplexes each group including an integer n > 1 of multiplexes, and each multiplex supporting an integer W > 1 of optical wavelength channels;

the integer G groups of wavelength demultiplexers, each demultiplexer being associated with an incoming multiplex;

the integer G groups of optical space switches, each group including the integer W space switches, each space switch having n input and n output ports, the space switches being serially assigned numbers from 0 to $(G \times W - 1)$, and a space switch assigned a number S being associated with wavelength number $[S + G]$ modulo W;

the integer G groups of wavelength multiplexers, each multiplexer being associated with an outgoing multiplex; and

the integer G groups of outgoing multiplexes, each group including n multiplexes, and each multiplex having W channels;

whereby the incoming multiplexes, the space switches, and the outgoing multiplexes are connected such that:

an $m^{th}$ input port of each $n \times n$ space switch S, the space switch being associated with a wavelength $\Lambda$, $0 \leq m \leq n$, $0 \leq S < G \times W$, and $0 \leq \Lambda < W$, is connected to a channel in the $m^{th}$ incoming multiplex belonging to a group $[S/G]$ modulo G, the channel corresponding to wavelength $\Lambda$; and

the $m^{th}$ output port of each $n \times n$ space switch S, $0 \leq m < n$ and $0 \leq S < G \times W$ being connected to a channel corresponding to wavelength $\Lambda$ in the $m^{th}$ outgoing multiplex belonging to an outgoing multiplex group, the group number being determined as the integer part of the ratio (S/W).

5. The agile data switch as claimed in claim 4 wherein the connection pattern between the incoming multiplexes and the space switches, and the connection pattern between the space switches and the outgoing multiplexes are reversed.

6. The agile data switch as claimed in claim 1 wherein the channel-switched core is modular and the switch comprises:

a plurality of slow-switching core modules, each of the core modules including a plurality of optical space switches;
a plurality of fast-switching edge modules; and
a core controller associated with each core module, the core controller instructing the fast-switching edge modules to switch from unused inner channels to respective new inner channels reconfigured in the care module, thereby masking switching latency of the slow-switching core modules without interrupting data transfer from the source edge-modules.

7. The agile data switch as claimed in claim 6 wherein each core module comprises a plurality of parallel optical space switches and the number of inner channels is greater than the number of outer channels.

8. An agile data switch as claimed in claim 7 wherein each edge module is connected by at least two inner channels to each optical space switch of each core module and least one inner channel connecting each edge module to each core module is an idle inner channel used to facilitate reconfiguration of the core module.

9. An agile data switch as claimed in any one of claims 6-8 wherein:

each edge module has a plurality of ingress ports, each of the ingress ports having an associated ingress queue; and
an ingress scheduler sorts packets arriving in the ingress queues from the subtending packet sources, the sort being by egress edge module from which the respective packets are to egress from the switch for delivery to the subtending packet sinks.

10. An agile data switch as claimed in claim 9 wherein:

the ingress scheduler periodically determines a number of packets waiting in the ingress queues for each respective ingress edge module and a controller of the ingress edge module sends reconfiguration request messages to the controllers of the core modules as the number of waiting packets fluctuates; and
a reconfiguration request message sent to a given controller of a core module is determined by a preferred routing table available to the controller of the ingress edge module.

11. An agile data switch as claimed in claim 10 wherein each ingress edge module has a reconfiguration timing circuit for each core module, each of the reconfiguration timing circuits being time-coordinated with a time counter in the respective edge modules that host processors for the core modules, to coordinate data transfer from the ingress edge modules when the core modules are reconfigured to change connectivity.

12. A method of coordinating connection changes in an agile distributed data switch comprising a plurality of data switching modules interconnected by a channel-switched core, the switching modules being spatially distributed such that propagation delay periods from the respective modules to the channel-switched core are generally unequal and a core controller associated with the channel-switched core has a negligible propagation delay due to proximity to the channel-switched core, the core controller being designated as a global time keeper, each of the switching modules having a cyclic time counter of a predetermined period D, and any one of paths connecting a given module to other modules may be reconfigured by the core controller so that internal connections within the given module must be changed accordingly, **CHARACTERIZED** by:

broadcasting from the core controller a reconfiguration request message which includes a target time T at which connection reconfiguration at the channel-switched core will occur; and

receiving the broadcast target time at each module affected by the reconfiguration and performing necessary connection changes at a time selected so that the data transmitted by each module after the connection changes occur arrive at the channel-switched core at the target time T, and the data are routed according to the re-arranged paths at the channel-switched core.

13. The method as claimed in claim 12 wherein the target time T is implicitly assigned a default value equal to the time counter period D and the value of T is not included in the reconfiguration request message.

14. The method as claimed in claim 12 wherein the core controller broadcasts its reconfiguration request message which includes a target time T at an instant T1 < T so that the difference between T and T1 does not exceed a period of the cyclic time counter in each of the modules.

15. The method as claimed in claim 12 wherein the period of the cyclic time counter at each module exceeds a largest propagation delay between any module and the core controller plus a time allowance sufficient for any module to implement a connection reconfiguration.

16. The method as claimed in claim 12 wherein the propagation delay from each module to the channel-switched core is negligible and the core controller broadcasts reconfiguration request packets to all modules before the target time T, permitting a predetermined interval to implement the reconfiguration changes required at each affected module.

17. A method as claimed in any one of claims 12-16 further comprising steps of:

sending a timing packet from each of the modules to the core controller when the local cyclic time counter of a respective module is zero; attaching a time indication of the global time counter to the timing packet upon receiving the timing packet at the core controller, the time indication corresponding to a global time counter indication on receipt of a first bit of the timing packet; placing the timing packets in a transmit queue at the core controller; sending the timing packets back to the respective modules; and resetting the local time counters of the respective modules according to information extracted from the respective timing packets.

18. The method as claimed in claim 17 wherein the global time counter at the core controller is an up-counter of C bits and the local time counter at each module is a down-counter of C bits, and when a module receives a timing packet, the module extracts the time indication and resets its down-counter by resetting each of its C bits to "1" when the reading of its down-counter equals the time indication.

19. The method as claimed in claim 17 wherein the time counters at both the core controller and the modules are up-counters each of C bits and when a module receives a timing packet, it extracts the time indication, determines a $1^s$-compliment of the time indication, and resets its up-counter to zero when its time counter reading equals the $1^s$-compliment.

20. The method as claimed in claim 17 wherein the time-counters at both the core controller and the modules are down-counters each of C bits and when a module receives a timing packet, it extracts the time indication, determines its $1^s$-compliment, and resets its down-counter to zero when its reading equals the $1^{s^-}$compliment of the time indication.

21. A method of channel-switching data packet streams received on inner links from fast-switching edge modules using optical space switches in a core module of a geographically distributed packet switch, **CHARACTERIZED** by:

using uncommitted connections in the optical space switches to configure new connections in the optical space switches in response to reconfiguration requests received from the fast-switching edge modules; and

instructing the fast-switching edge modules to switch from unused inner channels to the new connections reconfigured in the core module, without interrupting data transfer from the source edge-modules.

22. A method as claimed in claim 21 wherein the optical space switches in the core modules are slow-switching space switches, and during reconfiguration of the core the controller forms new connections using idle channels in a first reconfiguration cycle and replaces connections released in favor of the new connections in a subsequent reconfiguration cycle.

23. A method as claimed in claim 21 wherein switching delay in the optical space switches is negligible, and during reconfiguration of the space switches in the core, the inner channels are released and new connections are made during a single reconfiguration cycle.

24. The method as claimed in claim 23 wherein respective edge modules must pause and interrupt data transfer during a period of time exceeding the negligible switching delay of the space switches in the plurality of core modules.

25. A method as claimed in claim 21 wherein during a connection assignment process in preparation for a reconfiguration of a core module, connections are assigned in a process that starts from a reference space switch and proceeds in a predetermined order to the other space switches, whereas connection releases are processed in an exactly opposite order.

26. A method as claimed in claim 21 wherein during a connection assignment process in preparation for a reconfiguration of a core module, connections are assigned by a process in which an array indicating an occupancy of each of the optical space switches in the core module is sorted in an order of occupancy, and the connections are assigned in an order beginning from a most occupied optical space switch and proceeding to a least occupied optical space switch, whereas connection releases are processed in an exactly opposite order.

27. A method as claimed in any one of claims 21-26 wherein the idle inner channels are used to form uncommitted connections for transferring data traffic from the subtending sources to the subtending sinks without a guaranteed quality of service.

28. A method as claimed in claim 27 wherein the uncommitted connections are concatenated from an idle inner channel from an ingress edge module to the core module and an idle inner channel from the core module to an egress edge module to form the uncommitted connection.

29. A method as claimed in claim 28 wherein the uncommitted connection is assigned by the controller based on lists of preferred uncommitted connections sent to the controller from the ingress edge modules.

30. A method as claimed in any one of claims 21-29 wherein a selection of space switches for reconfiguration increases a variance in an occupancy of the respective optical space switches in a core module.

31. A method as claimed in claim 30 wherein the occupancy of the respective optical space switches in a core module is based on a count of committed connections.

32. A method as claimed in claim 31 wherein a selection of space switches for reconfiguration releases is based on a maximum vacancy congruence between a release list and a respective connectivity array for each of the optical space switches in a core module.

33. A method as claimed in claim 31 wherein a selection of space switches for reconfiguration of connections is based on a preference for optical space switches in the core module that are least occupied.

34. A switched data network including an agile switch as claimed in any one of claims 1-11.

Fig1a

EP 1 043 912 A2

90

87  86

85  93

82

84

88  92

Fig. 1b

Fig. 2

Fig. 3a

EP 1 043 912 A2

*Fig. 3b*

*Fig. 3c*

EP 1 043 912 A2

Fig. 4

W channels per multiplex
G groups
G × W  parallel space switches

Space-switch S          S = 0, 1, ....., (W × G - 1)

From

$$\left\{\quad\left[\frac{S}{G}\right]_G\quad , m, \quad \Lambda\quad\right\}$$

m = 0, 1, ..., n-1

$$\left\{\text{Group, incoming multiplex, channel}\right\}$$

$$\left\{\left\lfloor\frac{S}{W}\right\rfloor\quad , m , \Lambda\right\}$$

$$\left\{\text{Group, outgoing multiplex, channel}\right\}$$

0          0

m     S     m

n-1     Λ     n-1

$$\left[\quad A\quad\right]_B\qquad \text{Reads:  A } \textit{modulo } B$$

*Fig. 5a*

EP 1 043 912 A2

W channels per multiplex
G groups
G × W parallel space switches

Space-switch S          S = 0, 1, ....., (W × G - 1)

From

$$\left\{ \left\lfloor \frac{S}{W} \right\rfloor , m , \Lambda \right\}$$

$$\left\{ \left[ \frac{S}{G} \right]_G , m , \Lambda \right\}$$

| 0 | | 0 |
|---|---|---|
| m | S | m |
| | Λ | |
| n-1 | | n-1 |

m = 0, 1, ..., n-1

$$\left\{ \text{Group, incoming multiplex, channel} \right\}$$

$$\left\{ \text{Group, outgoing multiplex, channel} \right\}$$

$$\left[ A \right]_B \qquad \text{Reads: A } modulo \text{ B}$$

*Fig. 5b*

EP 1 043 912 A2

*Fig. 6*

EP 1 043 912 A2

Fig. 7

Fig. 8

Fig. 9

**280**

Connection request queue

282 Source module

283 Sink module

284 Required capacity

*Fig. 10*

**290**

Progress queue

Connection number

292 Source module

293 Intermediate module

294 Sink module

295 First space switch

296 Second space switch

297 Assigned capacity

*Fig. 11*

EP 1 043 912 A2

**Space switch reconfiguration**

*Fig. 12a*

| Inlet | 0 | 1 | 2 | 3 | 4 | 5 | 6 | 7 | 8 | 9 | 10 | 11 | 12 | 13 | 14 | 15 | 306 |
|---|---|---|---|---|---|---|---|---|---|---|---|---|---|---|---|---|---|
| outlet | 5 | **8** | 6 | 0 | 13 | 1 | **12** | 9 | 3 | 15 | **11** | 14 | 10 | 7 | **2** | 4 | 308 |

*Fig. 12b*

| Inlet | 0 | 1 | 2 | 3 | 4 | 5 | 6 | 7 | 8 | 9 | 10 | 11 | 12 | 13 | 14 | 15 | 306 |
|---|---|---|---|---|---|---|---|---|---|---|---|---|---|---|---|---|---|
| outlet | 5 | **11** | 6 | 0 | 13 | 1 | **2** | 9 | 3 | 15 | **12** | 14 | 10 | 7 | **8** | 4 | 308 |

**At source**

314

To Input 1    | 11 | 8 |    312

To Input 6    | 2 | 12 |    *Fig. 12c*

To Input 10    | 12 | 11 |

To Input 14    | 8 | 2 |

Guard time

**At space switch**

314      312

Input 1    | 11 | 8 |

Input 6    | 2 | 12 |

Input 10    | 12 | 11 |    *Fig. 12d*

Input 14    | 8 | 2 |

EP 1 043 912 A2

EP 1 043 912 A2

324

$t_1$

$\{t_1, t_2\}$

Module
time-counter circuit 174

322

$t_2$

$x_2$

Global
time-counter circuit 164

326

$x_1$

$\{x_1, x_2\}$

Module
time-counter circuit 174

*Fig. 13a*

→ time

324

[T]

T

322

T

326

$\{x_1, x_2\}$

[T]

T

*Fig. 13b*

$y + \bar{y} = D$

Fig. 14a

Fig. 14b

EP 1 043 912 A2

Slope = -1

Global

342

344

T

$\overline{y}$

y

*Fig. 15a*

346

T

time

$y + \overline{y} = D$

y

$\overline{y}$

*Fig. 15b*

346

Fig. 16a

Fig. 16b

Electronic module
core-input port

Payload-packet
buffer    382

Timing-packet
buffer    384

Payload-packet
duration    386

Time
Counter output   388

390   2:1 selector

0

1

396

394

392   comparator

Fig. 17

EP 1 043 912 A2

*FIG. 18*

EP 1 043 912 A2

_FIG. 19_

EP 1 043 912 A2

Bank of parallel optical space switches (32 × 32 each)

36 parallel space switches

452

36 channels

454

Rotator-based universal switch (256 ports)

0

402/412

32 edge modules

N-1

402

409/410

450

FIG. 20

FIG. 21

Slow optical space switch

502 ⌒ 504

| 0 | | 0 |
| 1 | | 1 |
| 2 | | 2 |
| 3 | | 3 |

506a

Slow optical space switch

502 ⌒ 504

| 0 | | 0 |
| 1 | | 1 |
| 2 | | 2 |
| 3 | | 3 |

506b

*FIG. 22*

52

*FIG. 23*

EP 1 043 912 A2

Reconfiguration list

Release list

Connection list

*FIG. 24*

EP 1 043 912 A2

EP 1 043 912 A2

682

684  688  684a  684

Edge-0

Space-switch number

0 ... M-1

| | 2 | 5 | 5 | 4 | 7 | 5 | | 5 | 3 | 7 | 2 | 4 | | 3 | 2 | 4 | 0 |
|---|---|---|---|---|---|---|---|---|---|---|---|---|---|---|---|---|---|
| 1 | 7 | 2 | 4 | 7 | 4 | 6 | | 3 | 2 | 2 | 7 | 2 | | 2 | 6 | 6 | |
| 2 | 5 | 4 | | 6 | 1 | 0 | | 1 | 0 | 4 | 5 | 0 | 1 | | 5 | 1 | |
| 3 | 4 | 7 | 6 | 1 | 2 | 2 | | 4 | 5 | 0 | 1 | 1 | | 5 | 0 | 5 | |
| 4 | 0 | 6 | 0 | 0 | 3 | 7 | | 7 | 7 | 6 | 0 | | | 7 | 1 | 7 | |
| 5 | 3 | 3 | 3 | 2 | 0 | 1 | | 0 | 1 | 1 | 3 | 7 | 0 | | 3 | 0 | |
| 6 | 1 | 0 | 2 | 3 | 5 | 4 | | 5 | 4 | 3 | 6 | 3 | 6 | 4 | | 3 | |
| 7 | 6 | 1 | 1 | 5 | 6 | 3 | | 6 | 5 | 4 | 5 | 7 | 6 | | 4 | 2 | N-1 |

0                                                                 M-1

Most occupied

Least occupied

pointers

696 — | 0 | 1 | 3 | 4 | 5 | 6 | 8 | 9 | 10 | 12 | 2 | 7 | 11 | 14 | 13 | 12 |

694 — | | | | | | | | | | | | | | | | |

692 — | 0 | 0 | 1 | 0 | 0 | 0 | 0 | 1 | 0 | 0 | 0 | 1 | 4 | 2 | 1 | 0 |

0                                                                 M-1

index  0  1  2  3  4  5  6  7  8  9  10  11  12  13  14  15

*FIG. 25*

FIG. 26

402 — Edge modules

Reconfiguration requests

710 — Retain rejected requests to next cycle

702 — Formulate a release array and a request array

704 — Release array empty?

Yes → 706 — Done ?

Yes → 722 — Form reconfiguration messages

724 — Implement time-coordination procedure

732 — Release array

No → 712 — Identify the unvisited connectivity-array X of highest congruence level with the release array

716 — Update array X, arrays 692 and 696, and the release array (560)

No → 714 — Identify the unvisited connectivity-array Y of highest fit with the connection-request array

718 — Update array Y, arrays 692 and 696, and array 580 (connection-request

Rejected-requests array

736

Accepted-requests array

734

EP 1 043 912 A2

EP 1 043 912 A2

*FIG. 27*

*FIG. 28*

Inputs instructed to write in column 7 instead of column 2

1502 — Input rotator    Output rotator    — 1504

0    t = 0    t = 7    0    t = 0    t = 7
1    t = 1    W    t = 7    t = 1
     t = 2    t = 2
2    2W
1512    1514    1516    1518
3    3W
1506    1508
4    4W
5    t = 2    5W    t = 2    t = 7
6    t = 7    6W    t = 1
     t = 1
7    7W

FIG. 29

EP 1 043 912 A2

Inputs instructed to write in column 7 instead of column 2

*FIG. 30*

EP 1 043 912 A2

Edge-timing: redirection of egress port 4 - check text

*FIG. 31*